(19) Europäisches Patentamt
European Patent Office
Office européen des brevets

(11) EP 1 079 646 B1

(12) EUROPEAN PATENT SPECIFICATION

(45) Date of publication and mention of the grant of the patent:
**04.06.2008 Bulletin 2008/23**

(51) Int Cl.:
***H04Q 7/34*** *(2006.01)* ***H04Q 7/38*** *(2006.01)*

(21) Application number: **00306879.8**

(22) Date of filing: **11.08.2000**

(54) **Communication performance and blocking probability calculation method, apparatus in mobile communication system, and recording medium**

Verfahren, Einrichtung in einem mobilen Übertragungssystem und Aufzeichnungsmedium zur Übertragungsleistungsrechnung und zur Blockierungswahrscheinlichkeitsrechnung

Procédé, dispositif dans un système de communication mobile et support d'enregistrement pour le calcul de la performance de la communication et la probabilité de blocage d'appels

(84) Designated Contracting States:
**DE GB**

(30) Priority: **20.08.1999 JP 23479999**
**04.02.2000 JP 2000027990**

(43) Date of publication of application:
**28.02.2001 Bulletin 2001/09**

(60) Divisional application:
**03077512.6 / 1 381 247**

(73) Proprietor: **NTT DoCoMo, Inc.**
**Tokyo 100-6150 (JP)**

(72) Inventors:
- **Ishikawa, Yoshihiro**
  **Yokosuka-shi,**
  **Kanagawa 239-0841 (JP)**
- **Iwamura, Mikio**
  **Zushi-shi,**
  **Kanagawa 249-0008 (JP)**

(74) Representative: **Beresford, Keith Denis Lewis et al**
**BERESFORD & Co.**
**16 High Holborn**
**London WC1V 6BX (GB)**

(56) References cited:
**EP-A- 0 750 440** **EP-A- 0 863 619**
**WO-A-98/24199** **WO-A-99/26439**
**US-A- 5 293 640**

- **SUZUKI H ET AL: "Fast bandwidth reservation scheme with multi-link and multi-path routing in ATM networks" ONE WORLD THROUGH COMMUNICATIONS. FLORENCE, MAY 4 - 8, 1992, PROCEEDINGS OF THE CONFERENCE ON COMPUTER COMMUNICATIONS (INFOCOM), NEW YORK, IEEE, US, vol. 2 CONF. 11, 4 May 1992 (1992-05-04), pages 2233-2240, XP010062247 ISBN: 0-7803-0602-3**
- **RUBIN I ET AL: "Performance analysis of integrated data/voice star topology circuit-switched networks" CONFERENCE PROCEEDINGS ARTICLE IEEE, XP010083811**
- **VLAG VAN DE H A B ET AL: "EXACT COMPUTATION OF TIME AND CALL BLOCKING PROBABILITIES IN MULTI-TRAFFIC CIRCUIT-SWITCHED NETWORKS" PROCEEDINGS OF THE CONFERENCE ON COMPUTER COMMUNICATIONS (INFOCOM). TORONTO, JUNE 12 - 16, 1994, LOS ALAMITOS, IEEE COMP. SOC. PRESS, US, vol. 1, 12 June 1994 (1994-06-12), pages 56-65, XP000496453 ISBN: 0-8186-5572-0**

EP 1 079 646 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a communication performance calculation method and a communication performance calculation apparatus in a mobile communication system, and a blocking probability calculation method and a blocking probability calculation apparatus in a communication system, and a recording medium. More particularly, the present invention relates to a method and apparatus for calculating performance such as the blocking probability (the probability of rejection of a new call to the system) in a base station, or the probability of degradation in the communication performance due to traffic concentration, and a recording medium associated therewith. The present invention also relates to a method and apparatus for calculating the blocking probability in a mobile communication system, and a recording medium associated therewith.

In a mobile communication system like a widespread mobile telephone system today, the entire service area is usually divided into rather small areas called cells to provide services. Such a system comprises as shown in Fig. 1, for example, a plurality of base stations 102 for covering divided cells 106, and mobile stations 104 for conducting communication with the base stations 102 by establishing radio channels with the base stations.

The radio waves transmitted from the base stations 102 or mobile stations 104 at certain transmission power travel through the space with some attenuation and arrive at a receiving point. The attenuation the radio waves undergo usually increases with the distance between the transmitting site and the receiving site. Besides, the propagation loss varies greatly due to the surrounding geography and conditions of objects because the radio waves undergo blocking, reflection and diffraction by large buildings, mountains or hills. On the other hand, the receiving side requires received power higher than a certain level to receive and demodulate signals at a prescribed level of quality. Accordingly, it very important for area design in mobile communication systems to cover the service area efficiently by utilizing limited transmission power.

To achieve such design, a method is often used which estimates radio wave propagation conditions in the service areas by simulating the radio wave propagation from the specifications of the base stations and mobile stations and geographic data using a computer. Such a method is described, for example, in "Cell Design System in Mobile Communication" by Fujii, Asakura and Yamazaki, NTT DoCoMo Technical Journal Vol. 1, No. 4, pp. 28-34, 1995-01, or in "Total Support System for Station Establishment Design" by Ohmatuzawa and Yamashita, NTT DoCoMo Technical Journal Vol. 4, No. 1, pp. 28-31, 1996-04. These methods divide the cells into smaller subdivisions, store altitude data, geographic data and communication traffic data of individual subdivisions, and calculate the signal-to-interference ratio (SIR) at each receiving site or traffic for each base station. These methods employ as a multiple access scheme, frequency division multiple access (FDMA), or time division multiple access (TDMA).

On the other hand, as for code division multiple access (CDMA), not only the propagation conditions that vary the performance of the FDMA and TDMA, but also the communication traffic and its temporal variations have great effect on the performance. Japanese Patent Application laid-open No. 8-191481 (1996), "Call Admission Control Method and Apparatus", discloses a method of deciding the admission of a new call on the basis of an estimate of interference at a base station, in which it is emphasized that the interference is an important factor of deciding the performance of uplink channels in a CDMA system.

Furthermore, International Publication No. WO98/30057 "Call Admission Control Method and Mobile Station in CDMA Mobile Communication System" discloses a method for a mobile station to make a call admission decision by transmitting information on the uplink interference and downlink transmission power from the base station to mobile stations, in which it is emphasized that the total transmission power of the base station is an important factor of deciding the performance for the downlink. Such a scheme that carries out the area design with considering the communication traffic and its time variations is new to the CDMA system.

The foregoing conventional schemes have a great problem of being inapplicable to a CDMA system without change because interference caused by communications conducted by neighboring base stations is not counted as the traffic.

In addition, although the interference power from the same radio channel reused in distant sites greatly degrades the performance in the FDMA or TDMA system, since it is not counted as the traffic, it presents a problem of hindering accurate performance calculation.

Furthermore, since the conventional scheme does not consider the total downlink transmission power that serves as an important index in the CDMA system, it has a great problem of being inapplicable to the CDMA system without change.

Moreover, although the total transmission power has a great effect on the performance in the FDMA or TDMA system with a configuration of amplifying signals in common which are transmitted using multiple channels, there is no calculation method applicable to such a configuration, which presents a problem of being unable to calculate its performance.

In a communication system in which many users share a limited number of communication channels, there arises an occasion on which no communication channel is assignable to a user.

In a general communication system such as a fixed telephone system or mobile telephone system, many users share communication resources. For example, consider an office telephone system shared by ten employees. The probability that the ten employees conduct telephone conversations at the same time is very small, nearly zero. Thus, the number of circuits required in the office can be less than ten, and the employees share the limited number of channels, use them when necessary, and release them after their conversations so that other employees can use them. However, it sometimes takes place that no channel is available because all the channels are busy. In such a case, many of the present communication systems reject a new call, resulting in a call loss. It is preferable that the number of channels be as small as possible from an economical point of view. An excessively small number of channels, however, will increase the call loss and complaints of the employees, or hinder smooth processing of jobs. To satisfy such conflicting requirements, the Erlang B formula (see, Leonard Kleinrock, "Queueing Systems Volume I: Theory", John Wiley & Sons, pp. 105-106, 1975, for example) is used to implement a sufficiently small blocking probability of about 1% to 3%, for example, in designing the number of channels.

Such consideration about the office telephone system is also applicable to the fixed telephone system and the mobile communication system, as well. In particular, in the mobile communication system, communications between the base stations and mobile stations are established using radio transmission, and the resources the communications use are radio channels. Since the frequency band available for the mobile communication system is generally limited, the resource sharing becomes a more serious issue than in the fixed telephone network that uses wired circuits for information transmission. As radio channel access schemes the mobile communication usually utilizes, there are frequency division multiple access (FDMA), time division multiple access (TDMA) or code division multiple access (CDMA).

In the FDMA or TDMA system, the number of radio channels to be assigned to the stations can be designed using the Erlang B formula as in the conventional system because the radio frequencies available are assigned to the base stations in advance. In the CDMA system, however, since the base stations share the same radio frequency band, the conventional method is inapplicable.

The International Publication No. WO98/30057 "Call Admission Control Method and Mobile Station in CDMA Mobile Communication System" discloses a method of making a call admission decision on the basis of the uplink interference power observed by the base station and transmission power of the base station. It, however, only describes the method of making a decision as to whether the call is acceptable or not, and cannot obtain the blocking probability from the traffic applied to the system.

On the other hand, there is an example that formulates the relationship between the applied traffic and the blocking probability in the CDMA system. For example, a paper by A. M. Viterbi and A. J. Viterbi, "Erlang capacity of a power controlled CDMA system", IEEE J. Select. Areas Commun., Vol.11, pp. 892-900, Aug. 1993, discloses a method of calculating the mean and variance of the interference power observed by the base station from applied traffic, and simply calculating the blocking probability on the assumption that the interference power is normally distributed. The paper calculates the blocking probability $P_{blocking}$ by the following formula.

$$P_{blocking} \approx Q\left[\frac{A - E(Z')}{\sqrt{Var(Z')}}\right] \quad (1)$$

where E(Z') is the mean of the normalized interference, Var(Z') is the variance of the normalized interference, both of which are expressed as a function of the applied traffic. On the other hand, A is a threshold value of the normalized interference, and Q(x) is defined by the following equation.

$$Q(x) = \int_x^{\infty} \frac{1}{\sqrt{2\pi}} e^{-t^2/2} dt \quad (2)$$

Expression (1) corresponds to calculating the probability that the normalized interference, which is assumed to have the normal distribution, exceeds the threshold value A.

In practice, however, the interference power reduces when the call loss is present, and accurate calculation of the blocking probability is impossible without considering the reduction in the interference power due to the call loss.

Fig. 14 is a block diagram illustrating the calculation of the blocking probability by the conventional technique (disclosed by the foregoing paper). The method described in the paper calculates the blocking probability without considering the reduction in the interference power due to the call loss. Thus, it has a serious problem of being unable to calculate the blocking probability accurately.

US 5,293,640 discloses a generator for simulating interference power. As interference varies in dependence upon the instantaneous position of the mobile unit, the interference power results are characterised by means of a distribution function. The distribution function is approximated near to the generator, the mean value and deviation being calculated from interference field strengths.

SUMMARY OF THE INVENTION

The present invention is implemented in view of the foregoing problems. Therefore, an object of the present invention is to provide a method and the like of accurately and simply calculating the performance in a base station by calculating the traffic distribution in the base station in a mobile communication system.

Another object of the present invention is to provide a method and the like of simply and accurately calculating the blocking probability in a mobile communication system. The present invention modifies the load (such as applied traffic (applied traffic intensity), interference power, transmission power of the base station) in the mobile communication system by using a dummy generated within the system. This makes it possible to model the reduction in the load due to call loss which is not considered conventionally, and to better simulate an actual model by the simplified calculation of the blocking probability, thereby improving the accuracy of the blocking probability. In addition, the present invention determines the amount of change of the dummy on the basis of the blocking probability calculated and the dummy generated within the system, and calculates the blocking probability with varying the dummy. This makes it possible to bring the blocking probability and load reduction into balance, thereby improving the accuracy of the blocking Probability.

According to a first aspect of the present invention, there is provided a communication performance calculation method in a mobile communication system which includes a plurality of base stations and a plurality of mobile stations for carrying out communication with the base stations, wherein an area where the mobile stations are distributed is divided into a plurality of subdivisions, said communication performance calculation method being characterized by comprising:

a transmission power data storing step of storing, for each of the plurality of subdivisions, transmission power data of a base station corresponding to the subdivision, of a mobile station visiting the subdivision, or of both a base station corresponding to the subdivision and a mobile station visiting the subdivision;
a traffic intensity data storing step of storing, for each of the plurality of subdivisions, traffic intensity data of the subdivision;
a load calculating step of calculating a mean and variance of a load at a single base station from the transmission power data and the traffic intensity data of the plurality of subdivisions; and
a communication performance calculating step of calculating a probability that the load exceeds a predetermined threshold value from the mean and variance.

According to a second aspect of the present invention, there is provided a computer readable recording medium storing a program causing a computer to execute a communication performance calculation method in a mobile communication system which includes a plurality of base stations and a plurality of mobile stations for carrying out communication with the base stations, wherein an area where the mobile stations are distributed is divided into a plurality of subdivisions, said communication performance calculation method characterized by comprising:

a transmission power data storing step of storing, for each of the plurality of subdivisions, transmission power data of a base station corresponding to the subdivision, of a mobile station visiting the subdivision, or of both a base station corresponding to the subdivision and a mobile station visiting the subdivision;
a traffic intensity data storing step of storing, for each of the plurality of subdivisions, traffic intensity data of the subdivision;
a load calculating step of calculating a mean and variance of a load at a single base station from the transmission power data and the traffic intensity data of the plurality of subdivisions; and
a communication performance calculating step of calculating a probability that the load exceeds a predetermined threshold value from the mean and variance.

According to a third aspect of the present invention, there is provided a communication performance calculation apparatus in a mobile communication system which includes a plurality of base stations and a plurality of mobile stations for carrying out communication with the base stations, wherein an area where the mobile stations are distributed is divided into a plurality of subdivisions, said communication performance calculation apparatus characterized by comprising:

transmission power data storing means for storing, for each of the plurality of subdivisions, transmission power data of a base station corresponding to the subdivision, of a mobile station visiting the subdivision, or of both a base station corresponding to the subdivision and a mobile station visiting the subdivision;
traffic intensity data storing means for storing, for each of the plurality of subdivisions, traffic intensity data of the subdivision;
load calculating means for calculating a mean and variance of a load at a single base station from the transmission power data and the traffic intensity data of the plurality of subdivisions; and
communication performance calculating means for calculating a probability that the load exceeds a predetermined threshold value from the mean and variance.

BRIEF DESCRIPTION OF THE DRAWINGS

Fig. 1 is a diagram schematically showing a conventional mobile communication system;
Fig. 2 is a block diagram showing a configuration of a performance calculation apparatus of the mobile communication system of an embodiment in accordance with the present invention;
Fig. 3 is a schematic diagram illustrating a relationship between an area divided into a plurality of subdivisions and records on a storage corresponding to each subdivision in the embodiment;
Fig. 4 is a flowchart illustrating an operation when the present invention is applied to an uplink channel;
Fig. 5 is a flowchart illustrating an operation when the present invention is applied to a downlink channel;
Fig. 6 is a block diagram showing a configuration of an uplink channel performance calculation apparatus to which the present invention is applied;
Fig. 7 is a block diagram showing a configuration of a downlink channel performance calculation apparatus to which the present invention is applied;
Fig. 8 is a block diagram showing a hardware configuration of a blocking probability calculation apparatus of a first comparative example;
Fig. 9 is a block diagram illustrating functions of the blocking probability calculation apparatus of the first comparative example;
Fig. 10 is a flowchart illustrating a blocking probability calculation processing by the blocking probability calculation apparatus of the first comparative example;
Fig. 11 is a block diagram illustrating an example in which a plurality of call loss factors are present;
Fig. 12 is a block diagram illustrating functions of the blocking probability calculation apparatus of a second comparative example;
Fig. 13 is a flowchart illustrating a blocking probability calculation processing by the blocking probability calculation apparatus of the second comparative example; and
Fig. 14 is a block diagram illustrating a conventional blocking probability calculation technique.

DETAILED DESCRIPTION OF PREFERRED EMBODIMENT

The embodiment in accordance with the present invention will now be described in detail with reference to accompanying drawings.

[EMBODIMENT]

Fig. 2 is a block diagram showing a hardware configuration of a performance calculation apparatus of an embodiment in accordance with the present invention. A performance calculation apparatus 200 of the present embodiment comprises a main controller 202, a storage 204, an input/output controller 206, an input unit 208, a display unit 210 and an output unit 212, and can consist of a personal computer, for example.

The left-hand side of Fig. 3 illustrates that each cell is divided into a plurality of subdivisions in the present invention. The right-hand side of Fig. 3 illustrates that the storage such as a fixed disk or memory stores for each subdivision at least one of the transmission powers (Pbi and Pmi) of a base station and mobile station when the mobile station visited the subdivision, and traffic intensity Ai of the present subdivision. To calculate the received power at a receiving site from the stored transmission power, it is calculated using such factors stored in the storage as the heights above the ground of antennas of the base stations and mobile stations, used radio frequencies, and the directivities of antennas of the base stations and mobile stations. The received power can be calculated using an empirical formula of the received power calculation disclosed, for example, in M.Hata, "Empirical Formula for Propagation Loss in Land Mobile Radio Services", IEEE Trans. on Vehic. Technol., Vol. VT-29, No. 3, Aug. 1980.

Fig. 4 is a flowchart illustrating an operation when the present invention is applied to an uplink channel. On the basis of the transmission power of the mobile station stored for each subdivision, the received power Ri at each base station, which corresponds to the signal transmitted from the mobile station present in the ith subdivision and received by the base station, is calculated. A step of calculating the mean and variance of the applied traffic calculates the mean of the applied traffic at the base station by the following equation.

$$\text{Average} = C0 + \Sigma\{C1 \times Ri \times Ai\} \qquad (3)$$

where Ai is the traffic intensity of the ith subdivision, C0 is a given constant, and C1 is a non-negative constant.

On the other hand, the variance of the applied traffic at the base station is calculated by the following equation.

$$\text{Variance} = C2 + \Sigma\{C1 \times C1 \times Ri \times Ri \times Ai\} \qquad (4)$$

where C2 is a positive constant.

Since the present embodiment is configured such that it calculates the variance besides the mean from the static data stored for each subdivision, it can calculate the degradation in communication performance and the blocking probability due to temporal variations in the traffic.

More specifically, a variable k for counting the base stations is initialized to one (step S402). Subsequently, a variable i for counting the subdivisions is initialized to one, and variables Sm and Sv for representing the mean and variance are initialized to zero (step S404). The received power of the base station is calculated for each subdivision (step S406). The calculation method is determined in advance as described above, in which the factors are used such as the heights above the ground of the antennas of the base station and mobile stations, the used radio frequencies and the directivities of antennas of the base station and mobile stations, and the foregoing empirical formula of the received power is used. Subsequently, the mean Sm and variance Sv are updated using the received power (step S408). The variable i is incremented by one (step S410), and the same operation is iterated if i is equal to or less than the number of the intended subdivisions (step S412). If i exceeds the number of the subdivisions, the performance calculation is started using the calculated Sm and Sv, and a predetermined threshold value (step S414). The calculation can be carried out in various methods depending on performance specifications. For example, when approximating the traffic distribution by a normal distribution, the performance P can be calculated by the following equation using a complementary error function Erfc( ’ ).

$$P = \frac{1}{2} \mathrm{Erfc}\left[\frac{T - Sm}{\sqrt{2 Sv}}\right] \qquad (5)$$

where T is the threshold value which can take one of the following values, for example: First, the interference power acceptable to the base station or its constant multiple; second, the sum of interference power acceptable to the base station or its constant multiple and the thermal noise power of the receiver of the base station; and third, a value C(1 - 1/η), where η is the ratio of the sum I to the thermal noise power N of the base station receiver, C is a given positive constant, and I is the sum of interference power acceptable to the base station or its constant multiple and the thermal noise power, of the base station receiver. Subsequently, the variable k is incremented by one to proceed to the calculation of the next base station (step S416). If k is equal to or less than the number of the intended base stations, the same processing is iterated for the next base station (step S418). If k exceeds the number of the intended base stations, the processing is completed. Although the constants C0 and C2 are assumed to be zero in the present flowchart, they can be any constant.

Fig. 5 is a flowchart illustrating an operation when the present invention is applied to a downlink channel. In this case, the mean of the applied traffic at the base station is calculated by the following equation.

$$\text{Mean} = C0 + \Sigma\{C1 \times Pi \times Ai\} \quad (6)$$

where Pi is transmission power of the base station. The variance of the applied traffic at the base station is calculated by the following equation.

$$\text{Variance} = C2 + \Sigma\{C1 \times C1 \times Pi \times Pi \times Ai\} \quad (7)$$

Since the present embodiment is configured such that it calculates the variance besides the mean from the static data stored for each subdivision, it can calculate the degradation in communication performance and the blocking probability due to temporal variations in the traffic.

More specifically, a variable k for counting the base stations is initialized to one (step S502). Subsequently, a variable i for counting the subdivisions is initialized to one, and variables Sm and Sv for representing the mean and variance are initialized to zero (step S504). Subsequently, the mean Sm and variance Sv are updated using the transmission power stored for each subdivision (step S506). The variable i is incremented by one (step S508), and the same operation is iterated if i is equal to or less than the number of the intended subdivisions (step S510). If i exceeds the number of the subdivisions, the performance calculation is started using the calculated Sm and Sv, and the predetermined threshold value (step S512). The calculation can be carried out in various methods depending on performance specifications. For example, when approximating the traffic distribution by a normal distribution, the performance P can be calculated by the following equation using the complementary error function Erfc( ' ).

$$P = \frac{1}{2} Erfc\left[\frac{T - Sm}{\sqrt{2 Sv}}\right] \quad (8)$$

where T is the threshold value which can take the total maximum transmission power of the base stations or its constant multiple, for example. Subsequently, the variable k is incremented by one to proceed to the calculation of the next base station (step S514). If k is equal to or less than the number of the intended base stations, the same processing is iterated for the next base station (step S516). If k exceeds the number of the base stations, the processing is completed. Although the constants C0 and C2 are assumed to be zero in the present flowchart, they can be any constant.

Fig. 6 is a block diagram showing a hardware configuration of a performance calculation apparatus 600 of an uplink channel, to which the present invention is applied. In this figure, a subdivision data holding unit 602 holds the data of the transmission power Pi and traffic intensity Ai of each subdivision. A propagation associated data holding unit 604 holds the heights above the ground of the antennas of the base stations and mobile stations, radio frequencies or directivities of the antennas of the base stations and mobile stations, which are used for calculating the received power. A received power calculating unit 606 reads necessary data from the subdivision data holding unit 602 and propagation associated data holding unit 604, and calculates the received power. A traffic calculating unit 608 calculates the mean Sm and variance Sv of the traffic at the base stations from the received power Ri for each subdivision calculated by the received power calculating unit 606 and from the traffic intensity Ai. A performance calculating unit 610 calculates the performance such as the blocking probability and the probability of the degradation in the communication performance using the mean Sm and variance Sv calculated by the traffic calculating unit 608 and the threshold value T provided by a threshold value generator 612, and outputs them. The calculation of the performance using the mean Sm and variance Sv calculated by the traffic calculating unit 608, and the predetermined threshold value T can be carried out in various methods. For example, when approximating the traffic distribution by the normal distribution, the performance P can be calculated by the following equation using the complementary error function Erfc( ' ).

$$P = \frac{1}{2} Erfc\left[\frac{T - Sm}{\sqrt{2Sv}}\right] \quad (9)$$

where T is the threshold value which can take one of the following values, for example: First, the interference power acceptable to the base station or its constant multiple; second, the sum of interference power acceptable to the base station or its constant multiple and the thermal noise power of the receiver of the base station; and third, a value C(1-1/η), where η is the ratio of the sum I to the thermal noise power N of the base station receiver, C is a given positive constant, and I is the sum of interference power acceptable to the base station or its constant multiple and the thermal noise power of the base station receiver.

Fig. 7 is a block diagram showing a hardware configuration of a performance calculation apparatus 700 of a downlink channel, to which the present invention is applied. In this figure, a subdivision data holding unit 702 holds the transmission power Pi and traffic intensity Ai of each subdivision. A traffic calculating unit 704 calculates the mean Sm and variance Sv of the traffic at the base stations from the transmission power Pi and traffic intensity Ai. A performance calculating unit 706 calculates the performance such as the blocking probability and the probability of the degradation in the communication performance using the mean Sm and variance Sv calculated by the traffic calculating unit 704 and the threshold value T provided by a threshold value generator 708, and outputs them. The calculation of the performance using the calculated mean Sm and variance Sv, and the predetermined threshold value T can be carried out in various methods. For example, when approximating the traffic distribution by the normal distribution, the performance P can be calculated by the following equation using the complementary error function Erfc( ' ).

$$P = \frac{1}{2} Erfc\left[\frac{T - Sm}{\sqrt{2Sv}}\right] \quad (10)$$

where T is the threshold value which can take the total maximum transmission power of the base stations or its constant multiple, for example.

As described above, the method according to the present invention comprises a transmission power data storing step of storing transmission power data of the base stations corresponding to the subdivisions where the mobile stations are distributed and/or of the mobile stations visiting the subdivisions; a traffic intensity data storing step of storing traffic intensity data of the subdivisions; a traffic calculating step of calculating a mean and variance of applied traffic to the base stations; and a communication performance calculating step of calculating communication performance from the mean and variance. This makes it possible to carry out accurate and simple calculation of the communication performance.

In addition, according to the present invention, the traffic calculating step comprises a first calculating step of calculating, from the transmission power data of the mobile stations stored in the transmission power data storing step, received power at the base stations of signals sent from the mobile stations to the base stations; and a second calculating step of calculating, from the traffic intensity data stored in the traffic intensity data storing step and the received power, the mean and variance of the applied traffic at the base stations, thereby not only counting the interference traffic caused by communications carried out by the base stations of other subdivisions, but also counting as the traffic the interference power from the same radio channel reused by other subdivisions. This makes it possible to carry out accurate and simple calculation of the communication performance.

Furthermore, according to the present invention, the traffic calculating step comprises a third calculating step of calculating the mean and variance of the applied traffic at the base stations from the transmission power data of the base stations stored in the transmission power data storing step, and from the traffic intensity data stored in the traffic intensity data storing step, thereby taking account of the total downlink transmission power. Using the calculation method corresponding to this makes it possible to carry out the highly accurate and simple calculation of the communication performance at the base stations.

In addition, according to the present invention the communication performance calculating step comprises a probability calculating step of calculating probability distribution from the mean and variance of the applied traffic; and a probability decision step of calculating a probability that the applied traffic exceeds a predetermined threshold value. This makes it possible to carry out accurate and simple calculation of the communication performance.

Moreover, according to the present invention, the probability decision step comprises a step of setting acceptable interference power to the base stations or its constant multiple as the threshold value. This makes it possible to carry out highly accurate calculation of the communication performance.

In addition, according to the present invention, the probability decision step comprises a step of setting a sum of acceptable interference power to the base stations or its constant multiple and thermal noise power of receivers in base stations as the threshold value. This makes it possible to carry out highly accurate calculation of the communication performance.

Furthermore, according to the present invention, the probability decision step comprises a threshold value calculating step of carrying out calculation using a ratio of a sum of acceptable interference power to the base stations or its constant multiple and thermal noise power of receivers in the base stations to thermal noise power of the receivers; and a step of setting a calculation result in the threshold value calculating step as the threshold value. This makes it possible to carry out highly accurate calculation of the communication performance.

Moreover, according to the present invention, the probability decision step comprises a step of setting a total sum of maximum transmission powers of the base stations or its constant multiple as the threshold value. This makes it possible to carry out highly accurate calculation of the communication performance.

[FIRST COMPARATIVE EXAMPLE]

Fig. 8 is a block diagram showing a hardware configuration of a blocking probability calculation apparatus of a first comparative example.

The blocking probability calculation apparatus of the present example comprises a main controller 801, a storage 802, an input/output controller 803, an input unit 804, a display unit 805 and an output unit 806, which can consist of a personal computer, for example.

The main controller 801 consists of a CPU, for example, and carries out comprehensive control of the entire system. The main controller 801 is connected with the storage 802. The storage 802 can consist of a hard disk, a flexible disk, an optical disk or the like. The main controller 801 is connected, through the input/output controller 803, with the input unit 804 such as a keyboard and a mouse, with the display unit 805 for displaying input data, calculation results and the like, and with the output unit 806 such as a printer for outputting the calculation results.

The main controller 801 comprises an internal memory for storing its control program such as OS (Operating System), application programs such as calculating the blocking probability and data required, and carries out the calculation of the blocking probability using these programs.

Fig. 9 is a block diagram illustrating functions of the blocking probability calculation apparatus of the present example; and Fig. 10 is a flowchart illustrating a blocking probability calculation processing by the blocking probability calculation apparatus of the present example.

The blocking probability calculation apparatus as shown in Fig. 9 comprises a dummy generator 901, an inverter 902, a multiplier 903, a blocking probability calculating unit 904 and a comparator 905.

First, the blocking probability calculation apparatus receives the input with a load b on the communication system through the input unit 804 (step S1001). In the present example, it receives the applied traffic intensity as the load on the communication system.

Subsequently, the dummy generator 901 generates the dummy pd (step S1002). A modified applied traffic intensity b' is calculated from the applied traffic intensity b using the generated dummy pd (step S1003). Specifically, the inverter 902 converts the generated dummy pd to (1 - pd), and the multiplier 903 multiplies it by the applied traffic intensity b, thereby obtaining the modified applied traffic intensity $b' = (1 - pd) \times b$.

Subsequently, the blocking probability calculating unit 904 calculates the blocking probability p from the modified applied traffic intensity b' (step S1004). In the present embodiment, the blocking probability p is calculated using the method (formulae (1) and (2)) disclosed in the paper described above.

Then, the comparator 905 compares the dummy pd with the blocking probability p, and terminates the processing when the difference between the two is within a predetermined range, that is, when the two are considered to be equal (step S1005), in which case, it is considered that the sufficiently accurate blocking probability p is obtained. In other words, when the dummy pd is considered equal to the calculated blocking probability p, the modified applied traffic intensity $b' = (1 - pd) \times b$ is considered equal to $(1 - p) \times b$, which represents the applied traffic intensity taking account of the call loss. Accordingly, the blocking probability calculated from the modified applied traffic intensity b' can be considered accurate. The blocking probability p thus calculated is displayed on the display unit 805 as needed, and is output to the output unit 806.

When the difference between the dummy pd and the calculated blocking probability p exceeds the predetermined range, the processing is returned to step S1002 (step S1005). At step S1002, a new dummy pd is generated from the compared result of the dummy pd with the calculated blocking probability p. More specifically, a new dummy pd is made larger than the current pd if $p > pd$, and is made smaller than the current pd if $p < pd$.

After that, the processing from step S1002 to step S1004 is iterated until the difference between the dummy pd and the blocking probability p falls within the predetermined range.

Thus, the simple and accurate calculation of the blocking probability can be implemented in the mobile communication system.

Although the blocking probability calculation processing of the present example, that is, the processing by the dummy generator 901, inverter 902, multiplier 903, blocking probability calculating unit 904 and comparator 905 is carried out by means of software (programs), it can be implemented by means of hardware. In addition, the program of the blocking probability calculation processing can be prestored in a floppy disk, CD-ROM or the like so that the program can be loaded onto a memory or hard disk before its execution.

Furthermore, although the applied traffic intensity is input as the load on the mobile communication system in the present example, the interference power, the transmission power of the base station or the like can be input instead. In addition, although the calculation method disclosed in the paper described above is used for calculating the blocking probability, other calculation methods can be utilized.

Moreover, any system such as a fixed telephone communication system and a mobile communication system using an FDMA, TDMA or CDMA may be used, as long as it allows a plurality of users to carry out communications with sharing the resources, offering similar advantages.

[SECOND COMPARATIVE EXAMPLE]

The second comparative example of the blocking probability calculation apparatus calculates the blocking probability of each factor when a plurality of factors are present which bring about a call loss, each. The hardware configuration of the present embodiment of the blocking probability calculation apparatus is the same as that of Fig. 8.

Fig. 11 is a diagram showing a case where a plurality of call loss factors are present. When the blocking probabilities of switching machines 1101 and 1102 are p1 and p2, respectively, the blocking probability between A and B across the switching machines 1101 and 1102 is 1 - (1 - p1) × (1- p2). Accordingly, assuming that the applied traffic intensity between AB is b, the modified applied traffic intensity b' between AB considering the call loss is expressed as (1 - (1 - (1 - p1) × (1 - p2))) × b = ((1 - p1) × (1 - p2)) × b. Incidentally, the modified applied traffic intensity between AC (that is, the applied traffic intensity to the switching machine 1101) and the modified applied traffic intensity between BC (that is, the applied traffic intensity to the switching machine 1102) are equal to the modified applied traffic intensity between AB.

Thus, the control is implemented by generating the dummy pd, by calculating the blocking probabilities p1 and p2 of the switching machines 1101 and 1102 from the modified applied traffic intensity b' = (1 - pd) × b, and by comparing an estimated value C = 1 - (1 - p1) × (1 - p2) with the dummy pd to modify the dummy pd to match them.

Fig. 12 is a block diagram illustrating the functions of the blocking probability calculation apparatus of the present example, and Fig. 13 is a flowchart illustrating a blocking probability calculation processing of the present example.

The blocking probability calculation apparatus as shown in Fig. 12 comprises a dummy generator 1201, an inverter 1202, a multiplier 1203, blocking probability calculating units 1204-1 - 1204-N, a comparator 1205 and an estimated value calculating unit 1206.

In Fig. 13, steps S1301 - S1303 correspond to steps S1001 - S1003 in Fig. 10 of the second example.

At step S1304, the blocking probability calculating units 1204-1 - 1204-N, where N is a natural number, calculate the blocking probabilities p1-pN from the modified applied traffic intensity b' = (1-pd) × b. In the present embodiment, the blocking probabilities p1-pN are calculated using the method (formulae (1) and (2)) disclosed in the paper described above.

At step S1305, the estimated value calculating unit 1206 calculates the estimated value C = 1 - (1 - p1) × (1 - p2) X...X (1 - pN) from the calculated blocking probabilities p1 - pN.

At step S1306, the comparator 905 compares the dummy pd with the estimated value C, and terminates the processing when the difference between the two is within a predetermined range, that is, when the two are considered to be equal, in which case, it is considered that the sufficiently accurate blocking probabilities p1-pN are obtained. The blocking probabilities p1-pN thus calculated are displayed on the display unit 805 as needed, and are output to the output unit 806.

When the difference between the dummy pd and the estimated value C exceeds the predetermined range, the processing is returned to step S1302 (step S1306). At step S1302, a new dummy pd is generated on the basis of the compared result of the dummy pd with the estimated value C. More specifically, a new dummy pd is made larger than the current pd if C > pd, and is made smaller than the current pd if C < pd.

After that, the processing from step S1302 to step S1305 is iterated until the difference between the dummy pd and the estimated value C falls within the predetermined range.

Thus, the simple and accurate calculation of the blocking probability in the mobile communication system can be implemented.

Although the blocking probability calculation processing of the present example, that is, the processing by the dummy generator 1201, inverter 1202, multiplier 1203, blocking probability calculating units 1204-1 - 1204-N, comparator 1205 and the estimated value calculating unit 1206 is carried out by means of software (programs), it can be implemented by means of hardware. In addition, the program of the blocking probability calculation processing can be prestored in a floppy disk, CD-ROM or the like so that the program can be loaded onto a memory or hard disk before its execution.

Furthermore, although the applied traffic intensity is input as the load on the mobile communication system in the present example, the interference power, the transmission power of the base station or the like can be input instead. In addition, although the calculation method disclosed in the paper described above is used for calculating the blocking probability, other calculation methods can be utilized.

Moreover, any system such as a fixed telephone communication system and a mobile communication system using an FDMA, TDMA or CDMA may be used, as long as it allows a plurality of users to carry out communications with sharing the resources, offering similar advantages.

The present invention has been described in detail with respect to a preferred embodiment, and it will now be apparent from the foregoing to those skilled in the art that changes and modifications may be made without departing from the invention in its broader aspects, and it is the intention, therefore, in the appended claims to cover all such changes and modifications as fall within the scope of the claims.

## Claims

**1.** A communication performance calculation method in a mobile communication system which includes a plurality of base stations and a plurality of mobile stations for carrying out communication with the base stations, wherein an area where the mobile stations are distributed is divided into a plurality of subdivisions, said communication performance calculation method being **characterized by** comprising:

a transmission power data storing step of storing, for each of the plurality of subdivisions, transmission power data of a base station corresponding to the subdivision, of a mobile station visiting the subdivision, or of both a base station corresponding to the subdivision and a mobile station visiting the subdivision;
a traffic intensity data storing step of storing, for each of the plurality of subdivisions, traffic intensity data of the subdivision;
a load calculating step (S408; S506) of calculating a mean (Sm) and variance (Sv) of a load at a single base station from the transmission power data (Ri) and the traffic intensity data (Ai) of the plurality of subdivisions; and
a communication performance calculating step of calculating a probability that the load exceeds a predetermined threshold value from the mean and variance.

**2.** The communication performance calculation method as claimed in claim 1, wherein said load calculating step:

calculates, from the transmission power data of the mobile stations stored in the transmission power data storing step, received power at the single base station of signals sent from the mobile stations to the single base station (S406); and
calculates, from the traffic intensity data stored in the traffic intensity data storing step and the calculated received power, the mean (Sm) and variance (Sv) of the load at the single base station (S408).

**3.** The communication performance calculation method as claimed in claim 1, wherein said load calculating step:

calculates the mean and variance of the load at the single base station from the transmission power data of the base stations stored in the transmission power data storing step, and from the traffic intensity data stored in the traffic intensity data storing step.

**4.** The communication performance calculation method as claimed in claim 1, wherein said communication performance calculating step comprises:

a probability calculating step of calculating probability distribution from the mean (Sm) and variance (Sv) of the load; and
a probability decision step of calculating a probability that the load exceeds the predetermined threshold value (S414).

**5.** The communication performance calculation method as claimed in claim 4, wherein said probability decision step comprises a step of setting acceptable interference power to the single base station or the interference power multiplied by a constant as the threshold value.

**6.** The communication performance calculation method as claimed in claim 4, wherein said probability decision step comprises a step of setting a sum of acceptable interference power to the single base station or the interference power multiplied by a constant and thermal noise power of receivers in the single base station as the threshold value.

**7.** The communication performance calculation method as claimed in claim 4, wherein said probability decision step comprises:

a threshold value calculating step of carrying out a calculation using a ratio of a sum of acceptable interference power to the single base station or the interference power multiplied by a constant and thermal noise power of receivers in the single base station to thermal noise power of the receivers; and
a step of setting a calculation result in the threshold value calculating step as the threshold value.

**8.** The communication performance calculation method as claimed in claim 4, wherein said probability decision step comprises a step of setting a total sum of maximum transmission powers of the base stations or the total sum multiplied by a constant as the threshold value.

**9.** A computer readable recording medium storing a program causing a computer to execute a communication performance calculation method in a mobile communication system which includes a plurality of base stations and a plurality of mobile stations for carrying out communication with the base stations, wherein an area where the mobile stations are distributed is divided into a plurality of subdivisions, said communication performance calculation method **characterized by** comprising:

a transmission power data storing step of storing, for each of the plurality of subdivisions, transmission power data of a base station corresponding to the subdivision, of a mobile station visiting the subdivision, or of both a base station corresponding to the subdivision and a mobile station visiting the subdivision;
a traffic intensity data storing step of storing, for each of the plurality of subdivisions, traffic intensity data of the subdivision;
a load calculating step (S408; S506) of calculating a mean and variance of a load at a single base station from the transmission power data (Ri) and the traffic intensity data (Ai) of the plurality of subdivisions; and
a communication performance calculating step of calculating a probability that the load exceeds a predetermined threshold value from the mean and variance.

**10.** A communication performance calculation apparatus in a mobile communication system which includes a plurality of base stations and a plurality of mobile stations for carrying out communication with the base stations, wherein an area where the mobile stations are distributed is divided into a plurality of subdivisions, said communication performance calculation apparatus **characterized by** comprising:

transmission power data storing means (602; 702) for storing, for each of the plurality of subdivisions, transmission power data of a base station corresponding to the subdivision, of a mobile station visiting the subdivision, or of both a base station corresponding to the subdivision and a mobile station visiting the subdivision;
traffic intensity data storing means for storing, for each of the plurality of subdivisions, traffic intensity data of the subdivision;
load calculating means (606; 608; 704) for calculating a mean (Sm) and variance (Sv) of a load at a single base station from the transmission power data (Ri) and the traffic intensity data (Ai) of the plurality of subdivisions; and
communication performance calculating means (610) for calculating a probability that the load exceeds a predetermined threshold value from the mean and variance.

**11.** The communication performance calculation apparatus as claimed in claim 10, wherein said load calculating means:

calculates (606); from the transmission power data of the mobile stations stored by said transmission power data storing means, received power at the single base station of signals sent from the mobile stations to the single base station; and
calculates (608), from the traffic intensity data stored by said traffic intensity data storing means and the calculated received power, the mean and variance of the load at the single base station.

**12.** The communication performance calculation apparatus as claimed in claim 10, wherein said load calculating means:

calculates (704) the mean and variance of the load at the single base station from the transmission power data of the base stations stored by said transmission power data storing means, and from the traffic intensity data stored by said traffic intensity data storing means.

**13.** The communication performance calculation apparatus as claimed in claim 10, wherein said communication performance calculating means comprises:

probability calculating means (610; 706) for calculating probability distribution from the mean and variance of the load; and
probability decision means for calculating the probability that the load exceeds the predetermined threshold value (T).

**14.** The communication performance calculation apparatus as claimed in claim 13, wherein said probability decision means comprises means for setting acceptable interference power to the single base station or the interference power multiplied by a constant as the threshold value (612; 708).

**15.** The communication performance calculation apparatus as claimed in claim 13, wherein said probability decision means comprises means for setting a sum of acceptable interference power to the single base station or the interference power multiplied by a constant and thermal noise power of receivers in the single base station as the threshold value (612; 708).

**16.** The communication performance calculation apparatus as claimed in claim 13, wherein said probability decision means comprises:

threshold value calculating means (612) for carrying out calculation using a ratio of a sum of acceptable interference power to the single base station or the interference power multiplied by a constant and thermal noise power of receivers in the single base station to thermal noise power of the receivers; and
means for setting a calculation result by said threshold value calculating means as the threshold value.

**17.** The communication performance calculation apparatus as claimed in claim 13, wherein said probability decision means (706) comprises means for setting a total sum of maximum transmission powers of the base stations or the total sum multiplied by a constant as the threshold value.

## Patentansprüche

**1.** Kommunikationsperformanz-Berechnungsverfahren bei einem Mobilkommunikationssystem, das eine Vielzahl von Basisstationen und eine Vielzahl von Mobilstationen zur Durchführung einer Kommunikation mit den Basisstationen umfasst, wobei ein Bereich, wo die Mobilstationen verteilt sind, in eine Vielzahl von Unterteilungen aufgeteilt ist, **dadurch gekennzeichnet, dass** das Kommunikationsperformanz-Berechnungsverfahren aufweist:

einen Sendeleistungsdaten-Speicherschritt des Speicherns von Sendeleistungsdaten einer der Unterteilung entsprechenden Basisstation, einer die Unterteilung besuchenden Mobilstation oder sowohl einer der Unterteilung entsprechenden Basisstation als auch einer die Unterteilung besuchenden Mobilstation für jede der Vielzahl von Unterteilungen;
einen Verkehrswertdaten-Speicherschritt des Speicherns von Verkehrswertdaten der Unterteilung für jede der Vielzahl von Unterteilungen;
einen Lastberechnungsschritt (S408; S506) des Berechnens eines Mittelwerts (Sm) und einer Varianz (Sv) einer Last an einer einzelnen Basisstation aus den Sendeleistungsdaten (Ri) und den Verkehrswertdaten (Ai) der Vielzahl von Unterteilungen; und
einen Kommunikationsperformanz-Berechnungsschritt des Berechnens einer Wahrscheinlichkeit, dass die Last einen vorbestimmten Schwellenwert überschreitet, aus dem Mittelwert und der Varianz.

**2.** Kommunikationsperformanz-Berechnungsverfahren gemäß Anspruch 1, bei dem der Lastberechnungsschritt vornimmt:

Berechnen einer Empfangsleistung von Signalen, die von den Mobilstationen an die einzelne Basisstation gesendet werden, an der einzelnen Basisstation aus den bei dem Sendeleistungsdaten-Speicherschritt gespeicherten Sendeleistungsdaten der Mobilstationen (S406); und
Berechnen des Mittelwerts (Sm) und der Varianz (Sv) der Last an der einzelnen Basisstation aus den bei dem Verkehrswertdaten-Speicherschritt gespeicherten Verkehrswertdaten und der berechneten Empfangsleistung (S408).

**3.** Kommunikationsperformanz-Berechnungsverfahren gemäß Anspruch 1, bei dem der Lastberechnungsschritt vornimmt:

Berechnen des Mittelwerts und der Varianz der Last an der einzelnen Basisstation aus den bei dem Sendeleistungsdaten-Speicherschritt gespeicherten Sendeleistungsdaten der Basisstationen und aus den bei dem Verkehrswertdaten-Speicherschritt gespeicherten Verkehrswertdaten.

**4.** Kommunikationsperformanz-Berechnungsverfahren gemäß Anspruch 1, bei dem der Kommunikationsperformanz-Berechnungsschritt aufweist:

einen Wahrscheinlichkeitsberechnungsschritt des Berechnens einer Wahrscheinlichkeitsverteilung aus dem Mittelwert (Sm) und der Varianz (Sv) der Last; und
einen Wahrscheinlichkeitsbestimmungsschritt des Berechnens einer Wahrscheinlichkeit, dass die Last den vorbestimmten Schwellenwert überschreitet (S414).

**5.** Kommunikationsperformanz-Berechnungsverfahren gemäß Anspruch 4, bei dem der Wahrscheinlichkeitsbestimmungsschritt einen Schritt des Einstellens einer für die einzelne Basisstation akzeptablen Interferenzleistung oder der mit einer Konstanten multiplizierten Interferenzleistung als den Schwellenwert aufweist.

**6.** Kommunikationsperformanz-Berechnungsverfahren gemäß Anspruch 4, bei dem der Wahrscheinlichkeitsbestimmungsschritt einen Schritt des Einstellens einer Summe einer für die einzelne Basisstation akzeptablen Interferenzleistung oder der mit einer Konstanten multiplizierten Interferenzleistung und einer Wärmerauschleistung von Empfängern in der einzelnen Basisstation als den Schwellenwert aufweist.

**7.** Kommunikationsperformanz-Berechnungsverfahren gemäß Anspruch 4, bei dem der Wahrscheinlichkeitsbestimmungsschritt aufweist:

einen Schwellenwertberechnungsschritt des Durchführens einer Berechnung unter Verwendung eines Verhältnisses einer Summe einer für die einzelne Basisstation akzeptablen Interferenzleistung oder der mit einer Konstanten multiplizierten Interferenzleistung und einer Wärmerauschleistung von Empfängern in der einzelnen Basisstation zur Wärmerauschleistung der Empfänger; und
einen Schritt des Einstellens eines Berechnungsergebnisses in dem Schwellenwertberechnungsschritt als den Schwellenwert.

**8.** Kommunikationsperformanz-Berechnungsverfahren gemäß Anspruch 4, bei dem der Wahrscheinlichkeitsbestimmungsschritt einen Schritt des Einstellens einer Gesamtsumme von maximalen Sendeleistungen der Basisstationen oder der mit einer Konstanten multiplizierten Gesamtsumme als den Schwellenwert aufweist.

**9.** Computer-lesbares Aufzeichnungsmedium, das ein Programm speichert, das einen Computer veranlasst, ein Kommunikationsperformanz-Berechnungsverfahren bei einem Mobilkommunikationssystem auszuführen, das eine Vielzahl von Basisstationen und eine Vielzahl von Mobilstationen zur Durchführung einer Kommunikation mit den Basisstationen umfasst, wobei ein Bereich, wo die Mobilstationen verteilt sind, in eine Vielzahl von Unterteilungen aufgeteilt ist, **dadurch gekennzeichnet, dass** das Kommunikationsperformanz-Berechnungsverfahren aufweist:

einen Sendeleistungsdaten-Speicherschritt des Speicherns von Sendeleistungsdaten einer der Unterteilung entsprechenden Basisstation, einer die Unterteilung besuchenden Mobilstation oder sowohl einer der Unterteilung entsprechenden Basisstation als auch einer die Unterteilung besuchenden Mobilstation für jede der Vielzahl von Unterteilungen;
einen Verkehrswertdaten-Speicherschritt des Speicherns von Verkehrswertdaten der Unterteilung für jede der Vielzahl von Unterteilungen;
einen Lastberechnungsschritt (S408; S506) des Berechnens eines Mittelwerts (Sm) und einer Varianz (Sv) einer Last an einer einzelnen Basisstation aus den Sendeleistungsdaten (Ri) und den Verkehrswertdaten (Ai) der Vielzahl von Unterteilungen; und

einen Kommunikationsperformanz-Berechnungsschritt des Berechnens einer Wahrscheinlichkeit, dass die Last einen vorbestimmten Schwellenwert überschreitet, aus dem Mittelwert und der Varianz.

**10.** Kommunikationsperformanz-Berechnungsvorrichtung bei einem Mobilkommunikationssystem, das eine Vielzahl von Basisstationen und eine Vielzahl von Mobilstationen zur Durchführung einer Kommunikation mit den Basisstationen umfasst, wobei ein Bereich, wo die Mobilstationen verteilt sind, in eine Vielzahl von Unterteilungen aufgeteilt ist, **dadurch gekennzeichnet, dass** die Kommunikationsperformanz-Berechnungsvorrichtung aufweist:

eine Sendeleistungsdaten-Speichereinrichtung (602; 702) zum Speichern von Sendeleistungsdaten einer der Unterteilung entsprechenden Basisstation, einer die Unterteilung besuchenden Mobilstation oder sowohl einer der Unterteilung entsprechenden Basisstation als auch einer die Unterteilung besuchenden Mobilstation für jede der Vielzahl von Unterteilungen;
eine Verkehrswertdaten-Speichereinrichtung zum Speichern von Verkehrswertdaten der Unterteilung für jede der Vielzahl von Unterteilungen;
eine Lastberechnungseinrichtung (606; 608; 704) zum Berechnen eines Mittelwerts (Sm) und einer Varianz (Sv) einer Last an einer einzelnen Basisstation aus den Sendeleistungsdaten (Ri) und den Verkehrswertdaten (Ai) der Vielzahl von Unterteilungen; und
eine Kommunikationsperformanz-Berechnungseinrichtung (610) zum Berechnen einer Wahrscheinlichkeit, dass die Last einen vorbestimmten Schwellenwert überschreitet, aus dem Mittelwert und der Varianz.

**11.** Kommunikationsperformanz-Berechnungsvorrichtung gemäß Anspruch 10, bei der die Lastberechnungseinrichtung vornimmt:

Berechnen (606) einer Empfangsleistung von Signalen, die von den Mobilstationen an die einzelne Basisstation gesendet werden, an der einzelnen Basisstation aus den durch die Sendeleistungsdaten-Speichereinrichtung gespeicherten Sendeleistungsdaten der Mobilstationen; und
Berechnen (608) des Mittelwerts und der Varianz der Last an der einzelnen Basisstation aus den durch die Verkehrswertdaten-Speichereinrichtung gespeicherten Verkehrswertdaten und der berechneten Empfangsleistung.

**12.** Kommunikationsperformanz-Berechnungsvorrichtung gemäß Anspruch 10, bei der die Lastberechnungseinrichtung vornimmt:

Berechnen (704) des Mittelwerts und der Varianz der Last an der einzelnen Basisstation aus den durch die Sendeleistungsdaten-Speichereinrichtung gespeicherten Sendeleistungsdaten der Basisstationen und aus den durch die Verkehrswertdaten-Speichereinrichtung gespeicherten Verkehrswertdaten.

**13.** Kommunikationsperformanz-Berechnungsvorrichtung gemäß Anspruch 10, bei der die Kommunikationsperformanz-Berechnungseinrichtung aufweist:

eine Wahrscheinlichkeitsberechnungseinrichtung (610; 706) zum Berechnen einer Wahrscheinlichkeitsverteilung aus dem Mittelwert und der Varianz der Last; und
eine Wahrscheinlichkeitsbestimmungseinrichtung zum Berechnen der Wahrscheinlichkeit, dass die Last den vorbestimmten Schwellenwert (T) überschreitet.

**14.** Kommunikationsperformanz-Berechnungsvorrichtung gemäß Anspruch 13, bei der die Wahrscheinlichkeitsbestimmungseinrichtung eine Einrichtung zum Einstellen einer für die einzelne Basisstation akzeptablen Interferenzleistung oder der mit einer Konstanten multiplizierten Interferenzleistung als den Schwellenwert (612; 708) aufweist.

**15.** Kommunikationsperformanz-Berechnungsvorrichtung gemäß Anspruch 13, bei der die Wahrscheinlichkeitsbestimmungseinrichtung eine Einrichtung zum Einstellen einer Summe einer für die einzelne Basisstation akzeptablen Interferenzleistung oder der mit einer Konstanten multiplizierten Interferenzleistung und einer Wärmerauschleistung von Empfängern in der einzelnen Basisstation als den Schwellenwert (612; 708) aufweist.

**16.** Kommunikationsperformanz-Berechnungsvorrichtung gemäß Anspruch 13, bei der die Wahrscheinlichkeitsbestimmungseinrichtung aufweist:

eine Schwellenwertberechnungseinrichtung (612) zum Durchführen einer Berechnung unter Verwendung eines Verhältnisses einer Summe einer für die einzelne Basisstation akzeptablen Interferenzleistung oder der mit einer Konstanten multiplizierten Interferenzleistung und einer Wärmerauschleistung von Empfängern in der einzelnen Basisstation zur Wärmerauschleistung der Empfänger; und
eine Einrichtung zum Einstellen eines Berechnungsergebnisses durch die Schwellenwertberechnungseinrichtung als den Schwellenwert.

**17.** Kommunikationsperformanz-Berechnungsvorrichtung gemäß Anspruch 13, bei der die Wahrscheinlichkeitsbestimmungseinrichtung (706) eine Einrichtung zum Einstellen einer Gesamtsumme von maximalen Sendeleistungen der Basisstationen oder der mit einer Konstanten multiplizierten Gesamtsumme als den Schwellenwert aufweist.

## Revendications

**1.** Procédé de calcul de la performance de la communication dans un système de communication mobile qui comprend une pluralité de stations de base et une pluralité de stations mobiles pour assurer la communication avec les stations de base, dans lequel une zone où les stations mobiles sont réparties est divisée en une pluralité de subdivisions, ledit procédé de calcul de la performance de la communication étant **caractérisé en ce qu'**il comprend :

une étape de stockage des données de la puissance de transmission consistant à stocker, pour chacune parmi la pluralité des subdivisions, des données de la puissance de transmission d'une station de base correspondant à la subdivision, d'une station mobile visitant la subdivision, ou à la fois d'une station de base correspondant à la subdivision et d'une station mobile visitant la subdivision ;
une étape de stockage des données d'intensité du trafic consistant à stocker, pour chacune parmi la pluralité des subdivisions, des données d'intensité du trafic de la subdivision ;
une étape de calcul de charge (S408 ; S506) consistant à calculer une moyenne (Sm) et une variance (Sv) d'une charge sur une station de base individuelle à partir des données de la puissance de transmission (Ri) et des données d'intensité du trafic (Ai) de la pluralité des subdivisions ; et
une étape de calcul de la performance de la communication consistant à calculer une probabilité que la charge dépasse une valeur de seuil prédéterminée à partir de la moyenne et de la variance.

**2.** Procédé de calcul de la performance de la communication selon la revendication 1, dans lequel ladite étape de calcul de la charge :

calcule, à partir des données de la puissance de transmission des stations mobiles stockées dans l'étape de stockage des données de la puissance de transmission, la puissance reçue à la station de base individuelle des signaux envoyés par les stations mobiles à la station de base individuelle (S406) ; et
calcule, à partir des données d'intensité du trafic stockées dans l'étape de stockage des données d'intensité du trafic et la puissance reçue calculée, la moyenne (Sm) et la variance (Sv) de la charge à la station de base individuelle (S408).

**3.** Procédé de calcul de la performance de la communication selon la revendication 1, dans lequel ladite étape de calcul de la charge :

calcule la moyenne et la variance de la charge à la station de base individuelle à partir des données de la puissance de transmission des stations de base stockées dans l'étape de stockage des données de la puissance de transmission, et à partir des données d'intensité du trafic stockées dans l'étape de stockage des données d'intensité du trafic.

**4.** Procédé de calcul de la performance de la communication selon la revendication 1, dans lequel ladite étape de calcul de la performance de la communication comprend :

une étape de calcul de la probabilité consistant à calculer la distribution de la probabilité à partir de la moyenne (Sm) et de la variance (Sv) de la charge ; et
une étape de décision de probabilité consistant à calculer une probabilité que la charge dépasse la valeur de seuil prédéterminée (S414).

**5.** Procédé de calcul de la performance de la communication selon la revendication 4, dans lequel ladite étape de décision de probabilité comprend une étape de réglage de la puissance d'interférence acceptable à la station de base individuelle ou de la puissance d'interférence multipliée par une constante comme étant la valeur de seuil.

**6.** Procédé de calcul de la performance de la communication selon la revendication 4, dans lequel ladite étape de décision de probabilité comprend une étape de réglage d'une somme de la puissance d'interférence acceptable à la station de base individuelle ou de la puissance d'interférence multipliée par une constante et la puissance de bruit thermique des récepteurs dans la station de base individuelle comme étant la valeur de seuil.

**7.** Procédé de calcul de la performance de la communication selon la revendication 4, dans lequel ladite étape de décision de probabilité comprend :

une étape de calcul de la valeur de seuil qui consiste à effectuer un calcul en utilisant un rapport d'une somme de la puissance d'interférence acceptable à la station de base individuelle ou de la puissance d'interférence multipliée par une constante et de la puissance de bruit thermique des récepteurs dans la station de base individuelle à la puissance de bruit thermique des récepteurs ; et
une étape de réglage d'un résultat de calcul dans l'étape de calcul de la valeur de seuil comme étant la valeur de seuil.

**8.** Procédé de calcul de la performance de la communication selon la revendication 4, dans lequel ladite étape de décision de probabilité comprend une étape de réglage d'une somme totale des puissances de transmission maximales des stations de base ou de la somme totale multipliée par une constante comme étant la valeur de seuil.

**9.** Support d'enregistrement lisible par ordinateur stockant un programme conduisant un ordinateur à exécuter un procédé de calcul de la performance de la communication dans un système de communication mobile qui comprend une pluralité de stations de base et une pluralité de stations mobiles pour assurer la communication avec les stations de base, dans lequel une zone où les stations mobiles sont réparties est divisée en une pluralité de subdivisions, ledit procédé de calcul de la performance de la communication étant **caractérisé en ce qu'**il comprend :

une étape de stockage des données de la puissance de transmission consistant à stocker, pour chacune parmi la pluralité des subdivisions, des données de la puissance de transmission d'une station de base correspondant à la subdivision, d'une station mobile visitant la subdivision, ou à la fois d'une station de base correspondant à la subdivision et d'une station mobile visitant la subdivision ;
une étape de stockage des données d'intensité du trafic consistant à stocker, pour chacune parmi la pluralité des subdivisions, des données d'intensité du trafic de la subdivision ;
une étape de calcul de la charge (S408 ; S506) consistant à calculer une moyenne et une variance d'une charge sur une station de base individuelle à partir des données de la puissance de transmission (Ri) et des données d'intensité du trafic (Ai) de la pluralité des subdivisions ; et
une étape de calcul de la performance de la communication consistant à calculer une probabilité que la charge dépasse une valeur de seuil prédéterminée à partir de la moyenne et de la variance.

**10.** Appareil de calcul de la performance de la communication dans un système de communication mobile qui comprend une pluralité de stations de base et une pluralité de stations mobiles pour assurer la communication avec les stations de base, dans lequel une zone où les stations mobiles sont réparties est divisée en une pluralité de subdivisions, ledit appareil de calcul de la performance de la communication étant **caractérisé en ce qu'**il comprend :

un moyen de stockage des données de la puissance de transmission (602 ; 702) servant à stocker, pour chacune parmi la pluralité des subdivisions, des données de la puissance de transmission d'une station de base correspondant à la subdivision, d'une station mobile visitant la subdivision, ou à la fois d'une station de base correspondant à la subdivision et d'une station mobile visitant la subdivision ;
un moyen de stockage des données d'intensité du trafic servant à stocker, pour chacune parmi la pluralité des subdivisions, des données d'intensité du trafic de la subdivision ;
un moyen de calcul de la charge (606; 608; 704) servant à calculer une moyenne (Sm) et une variance (Sv) d'une charge sur une station de base individuelle à partir des données de la puissance de transmission (Ri) et des données d'intensité du trafic (Ai) de la pluralité de subdivisions ; et
un moyen de calcul de la performance de la communication (610) servant à calculer une probabilité que la charge dépasse une valeur de seuil prédéterminée à partir de la moyenne et de la variance.

**11.** Appareil de calcul de la performance de la communication selon la revendication 10, dans lequel ledit moyen de calcul de la charge :

calcule (606), à partir des données de la puissance de transmission des stations mobiles stockées par ledit moyen de stockage des données de la puissance de transmission, la puissance reçue à la station de base individuelle des signaux envoyés par les stations mobiles aux stations de base individuelles ; et
calcule (608), à partir des données d'intensité du trafic stockées par ledit moyen de stockage des données d'intensité du trafic et de la puissance reçue calculée, la moyenne et la variance de la charge à la station de base individuelle.

**12.** Appareil de calcul de la performance de la communication selon la revendication 10, dans lequel ledit moyen de calcul de la charge :

calcule (704) la moyenne et la variance de la charge à la station de base individuelle à partir des données de la puissance de transmission des stations de base stockées par ledit moyen de stockage des données de la puissance de transmission, et à partir des données d'intensité du trafic stockées par ledit moyen de stockage des données d'intensité du trafic.

**13.** Appareil de calcul de la performance de la communication selon la revendication 10, dans lequel ledit moyen de calcul de la performance de la communication comprend :

un moyen de calcul de la probabilité (610 ; 706) servant à calculer la distribution de la probabilité à partir de la moyenne et la variance de la charge ; et
un moyen de décision de probabilité servant à calculer la probabilité que la charge dépasse la valeur de seuil prédéterminée (T).

**14.** Appareil de calcul de la performance de la communication selon la revendication 13, dans lequel ledit moyen de décision de probabilité comprend un moyen servant à régler une puissance d'interférence acceptable à la station de base individuelle ou la puissance d'interférence multipliée par une constante comme étant la valeur de seuil (612 ; 708).

**15.** Appareil de calcul de la performance de la communication selon la revendication 13, dans lequel ledit moyen de décision de probabilité comprend un moyen servant à régler une somme de la puissance d'interférence acceptable sur la station de base individuelle ou de la puissance d'interférence multipliée par une constante et la puissance de bruit thermique des récepteurs dans la station de base individuelle comme étant la valeur de seuil (612; 708).

**16.** Appareil de calcul de la performance de la communication selon la revendication 13, dans lequel ledit moyen de décision de probabilité comprend :

un moyen de calcul de la valeur de seuil (612) servant à effectuer un calcul en utilisant un rapport d'une somme de la puissance d'interférence acceptable à la station de base individuelle ou de la puissance d'interférence multipliée par une constante et de la puissance de bruit thermique des récepteurs dans la station de base individuelle à la puissance de bruit thermique des récepteurs ; et
un moyen servant à régler un résultat de calcul par ledit moyen de calcul de la valeur de seuil comme étant la valeur de seuil.

**17.** Appareil de calcul de la performance de la communication selon la revendication 13, dans lequel ledit moyen de décision de probabilité (706) comprend un moyen servant à régler une somme totale des puissances de transmission maximales des stations de base ou la somme totale multipliée par une constante comme étant la valeur de seuil.

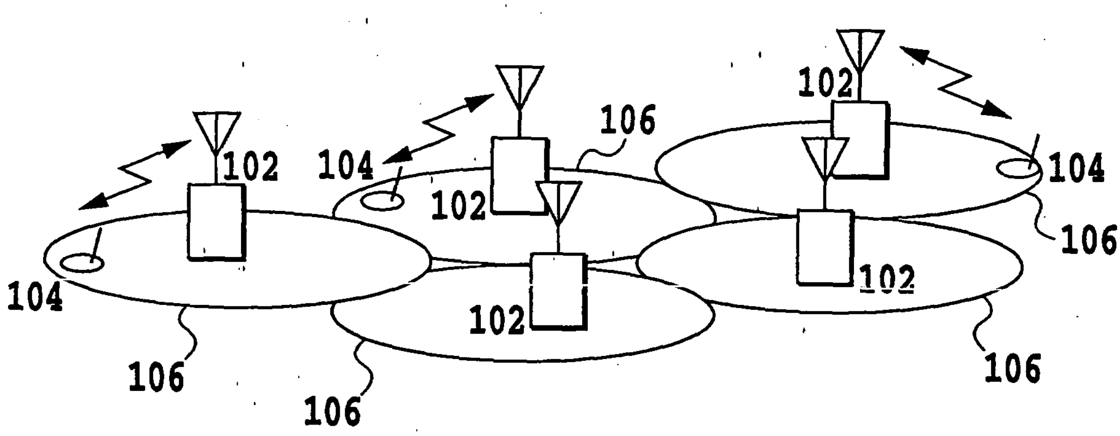


PRIOR ART

FIG.1

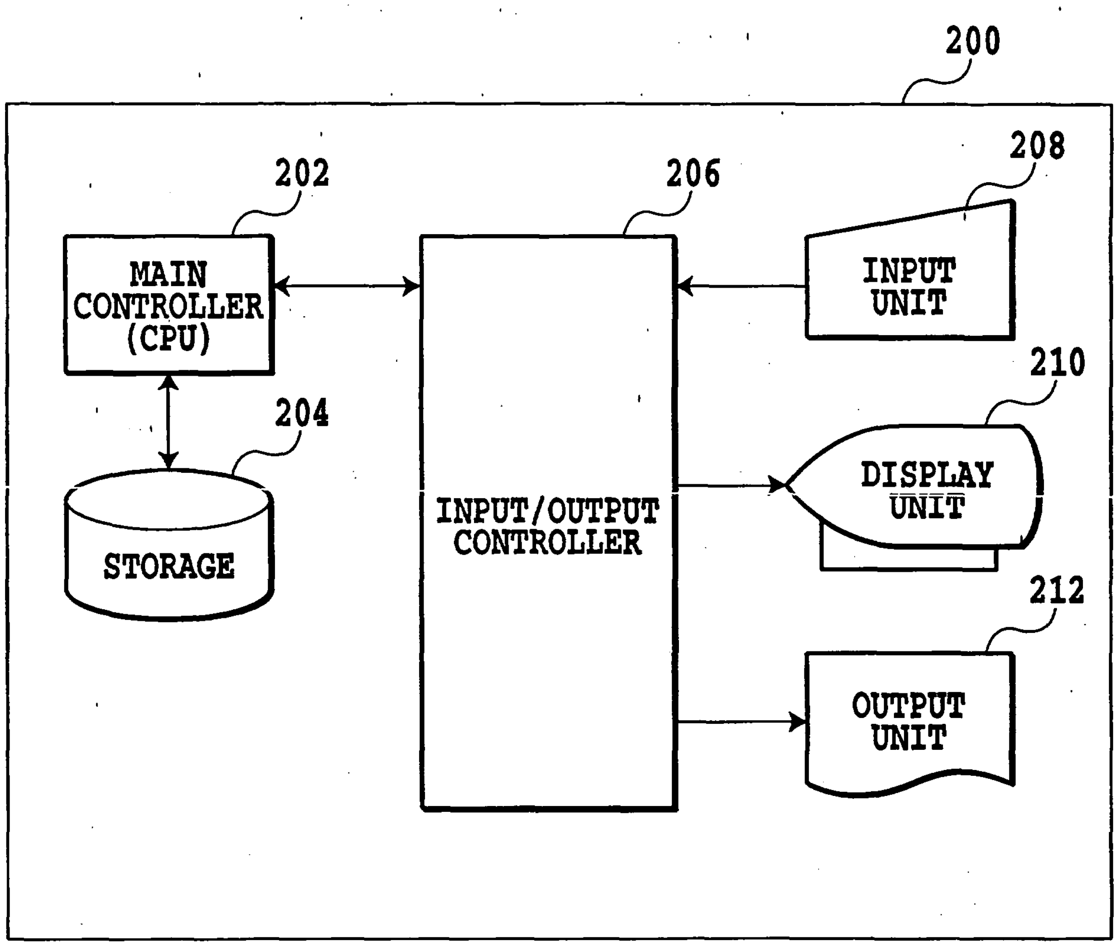
200
202
MAIN CONTROLLER (CPU)
204
STORAGE
206
INPUT/OUTPUT CONTROLLER
208
INPUT UNIT
210
DISPLAY UNIT
212
OUTPUT UNIT

FIG.2

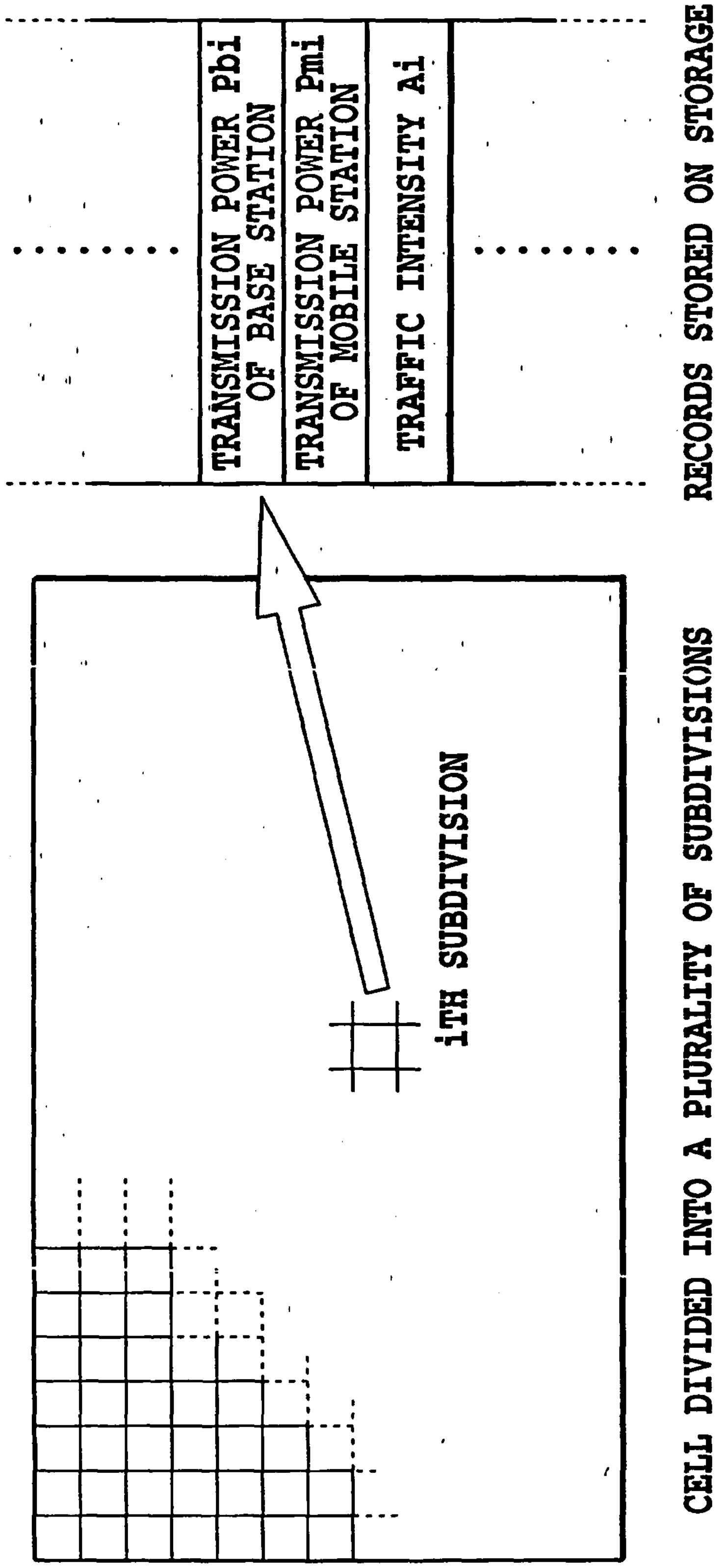
TRANSMISSION POWER Pbi OF BASE STATION
TRANSMISSION POWER Pmi OF MOBILE STATION
TRAFFIC INTENSITY Ai
iTH SUBDIVISION
CELL DIVIDED INTO A PLURALITY OF SUBDIVISIONS
RECORDS STORED ON STORAGE

FIG.3

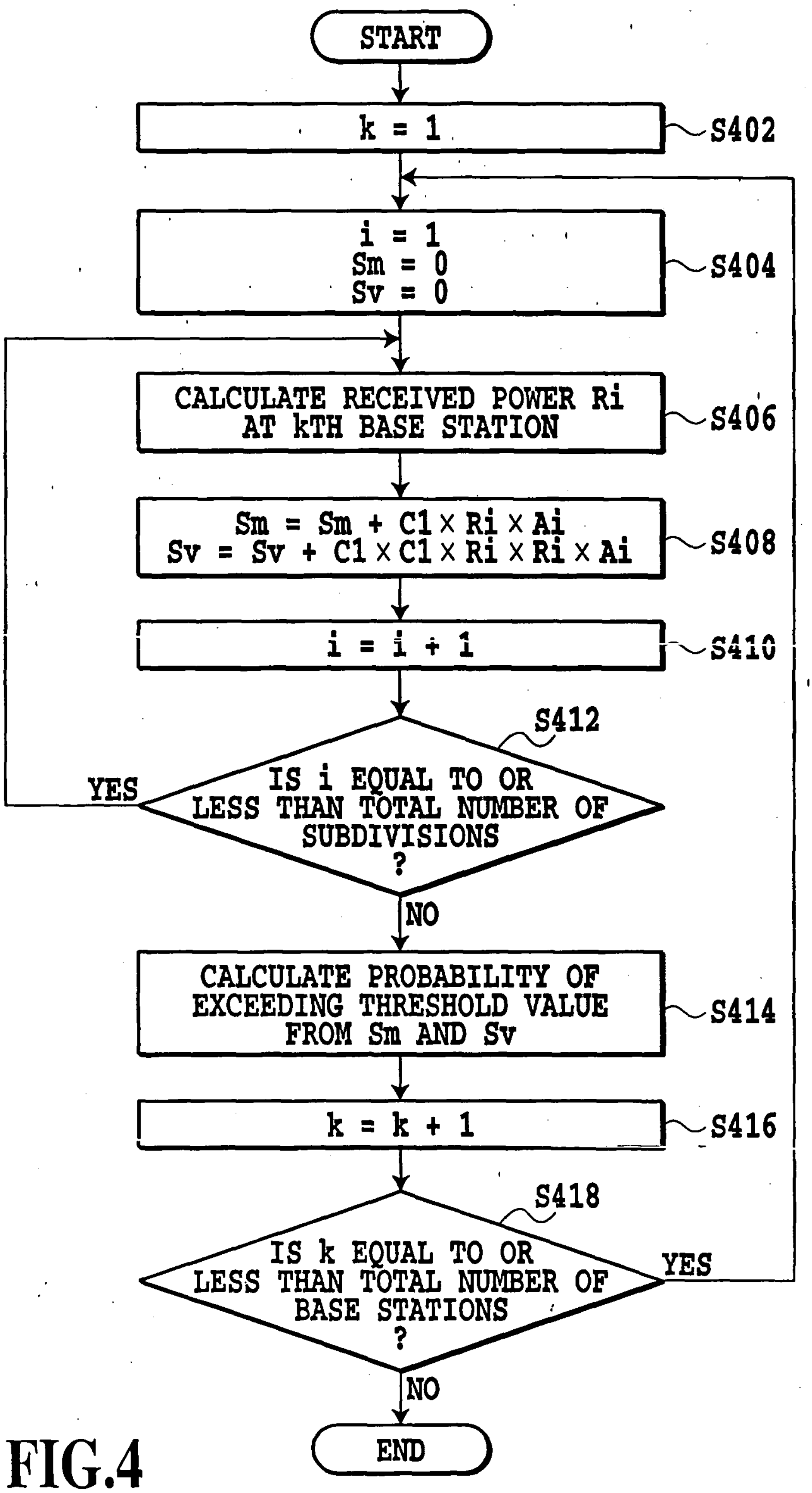
START
k = 1
S402
i = 1
Sm = 0
Sv = 0
S404
CALCULATE RECEIVED POWER Ri AT kTH BASE STATION
S406
Sm = Sm + C1 × Ri × Ai
Sv = Sv + C1 × C1 × Ri × Ri × Ai
S408
i = i + 1
S410
S412
IS i EQUAL TO OR LESS THAN TOTAL NUMBER OF SUBDIVISIONS ?
YES
NO
CALCULATE PROBABILITY OF EXCEEDING THRESHOLD VALUE FROM Sm AND Sv
S414
k = k + 1
S416
S418
IS k EQUAL TO OR LESS THAN TOTAL NUMBER OF BASE STATIONS ?
YES
NO
END

FIG.4

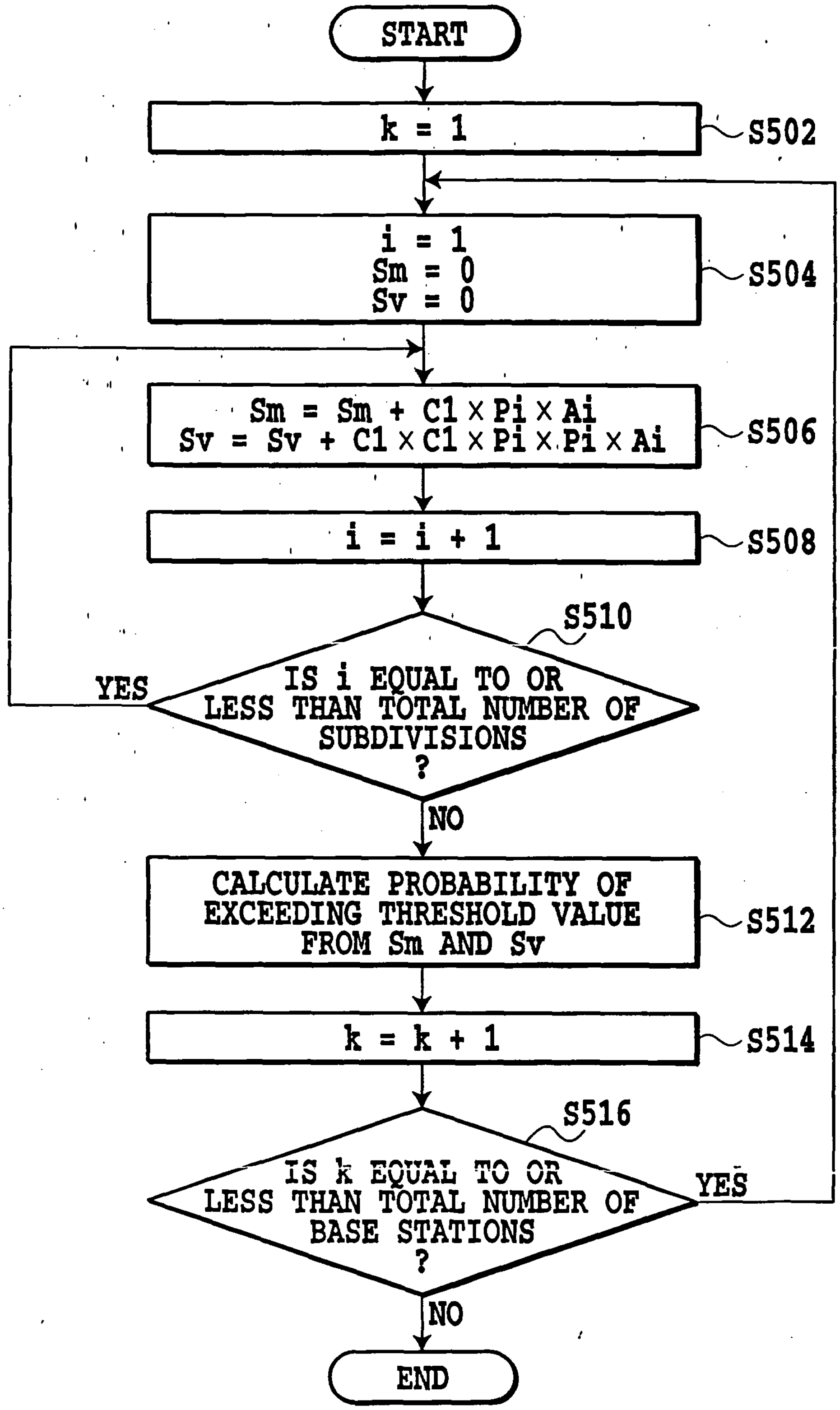
START
k = 1
S502
i = 1
Sm = 0
Sv = 0
S504
Sm = Sm + C1 × Pi × Ai
Sv = Sv + C1 × C1 × Pi × Pi × Ai
S506
i = i + 1
S508
S510
IS i EQUAL TO OR LESS THAN TOTAL NUMBER OF SUBDIVISIONS ?
YES
NO
CALCULATE PROBABILITY OF EXCEEDING THRESHOLD VALUE FROM Sm AND Sv
S512
k = k + 1
S514
S516
IS k EQUAL TO OR LESS THAN TOTAL NUMBER OF BASE STATIONS ?
YES
NO
END

FIG.5

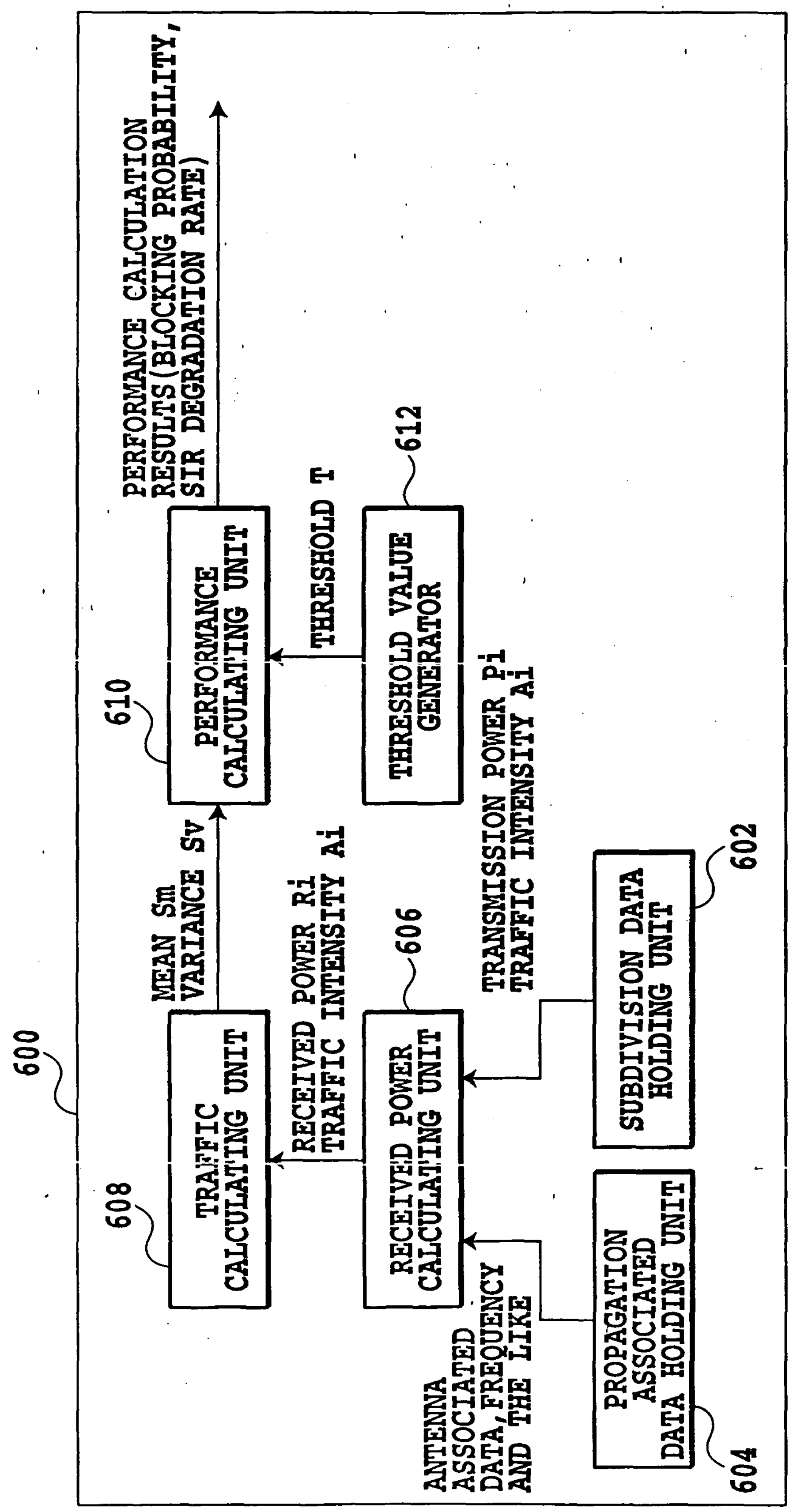
600
608
TRAFFIC CALCULATING UNIT
MEAN Sm
VARIANCE Sv
610
PERFORMANCE CALCULATING UNIT
PERFORMANCE CALCULATION RESULTS(BLOCKING PROBABILITY, SIR DEGRADATION RATE)
RECEIVED POWER Ri
TRAFFIC INTENSITY Ai
THRESHOLD T
606
RECEIVED POWER CALCULATING UNIT
612
THRESHOLD VALUE GENERATOR
ANTENNA ASSOCIATED DATA, FREQUENCY AND THE LIKE
TRANSMISSION POWER Pi
TRAFFIC INTENSITY Ai
PROPAGATION ASSOCIATED DATA HOLDING UNIT
604
SUBDIVISION DATA HOLDING UNIT
602

FIG.6

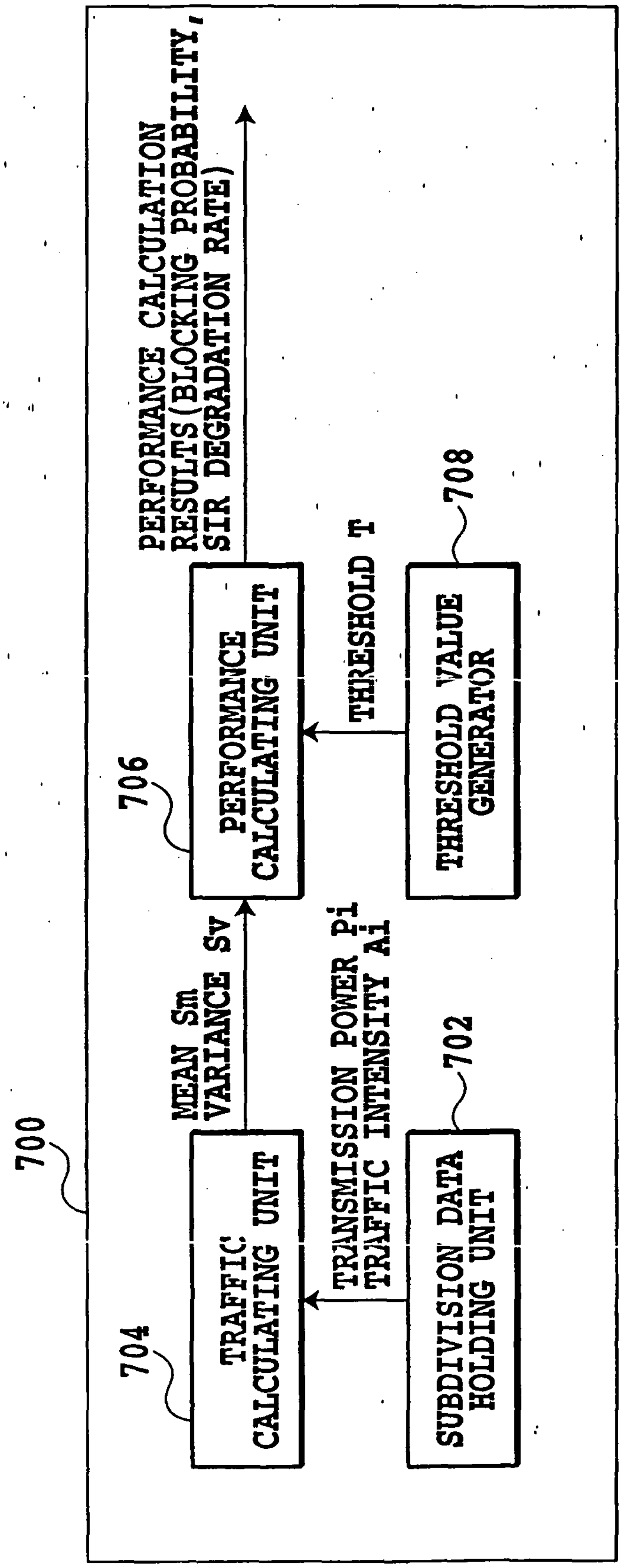
700
704
TRAFFIC CALCULATING UNIT
MEAN Sm
VARIANCE Sv
706
PERFORMANCE CALCULATING UNIT
PERFORMANCE CALCULATION RESULTS(BLOCKING PROBABILITY, SIR DEGRADATION RATE)
SUBDIVISION DATA HOLDING UNIT
702
TRANSMISSION POWER Pi
TRAFFIC INTENSITY Ai
THRESHOLD VALUE GENERATOR
708
THRESHOLD T

FIG.7

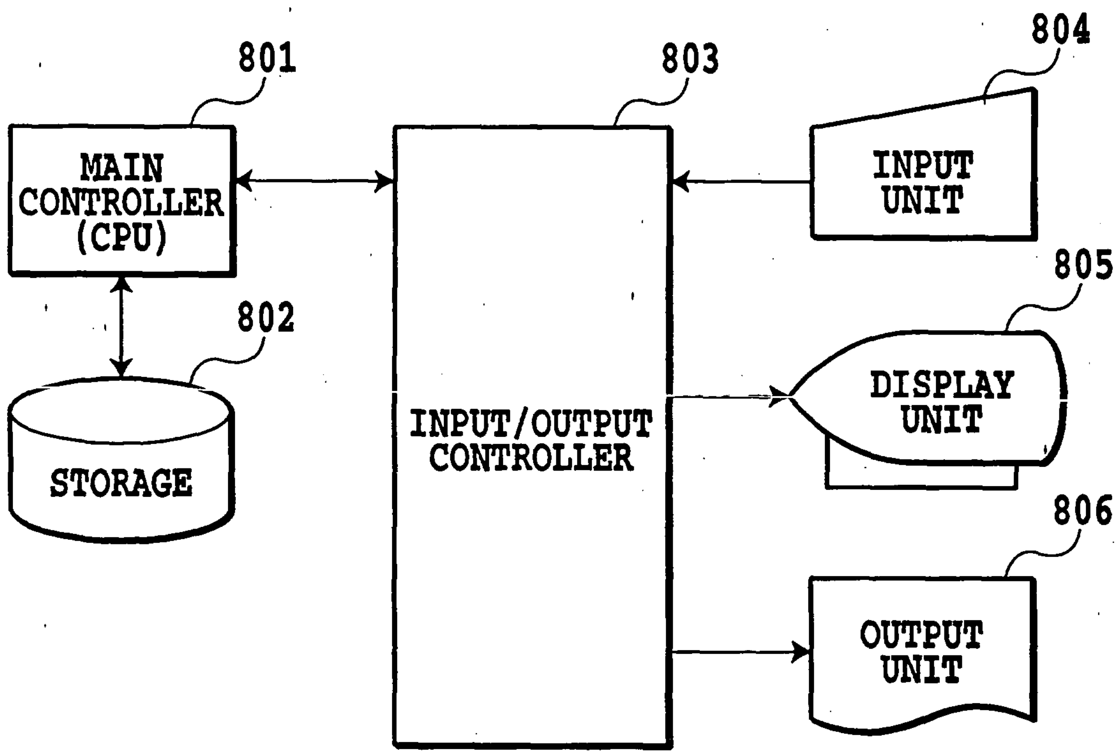
801
MAIN CONTROLLER (CPU)
802
STORAGE
803
INPUT/OUTPUT CONTROLLER
804
INPUT UNIT
805
DISPLAY UNIT
806
OUTPUT UNIT

FIG.8

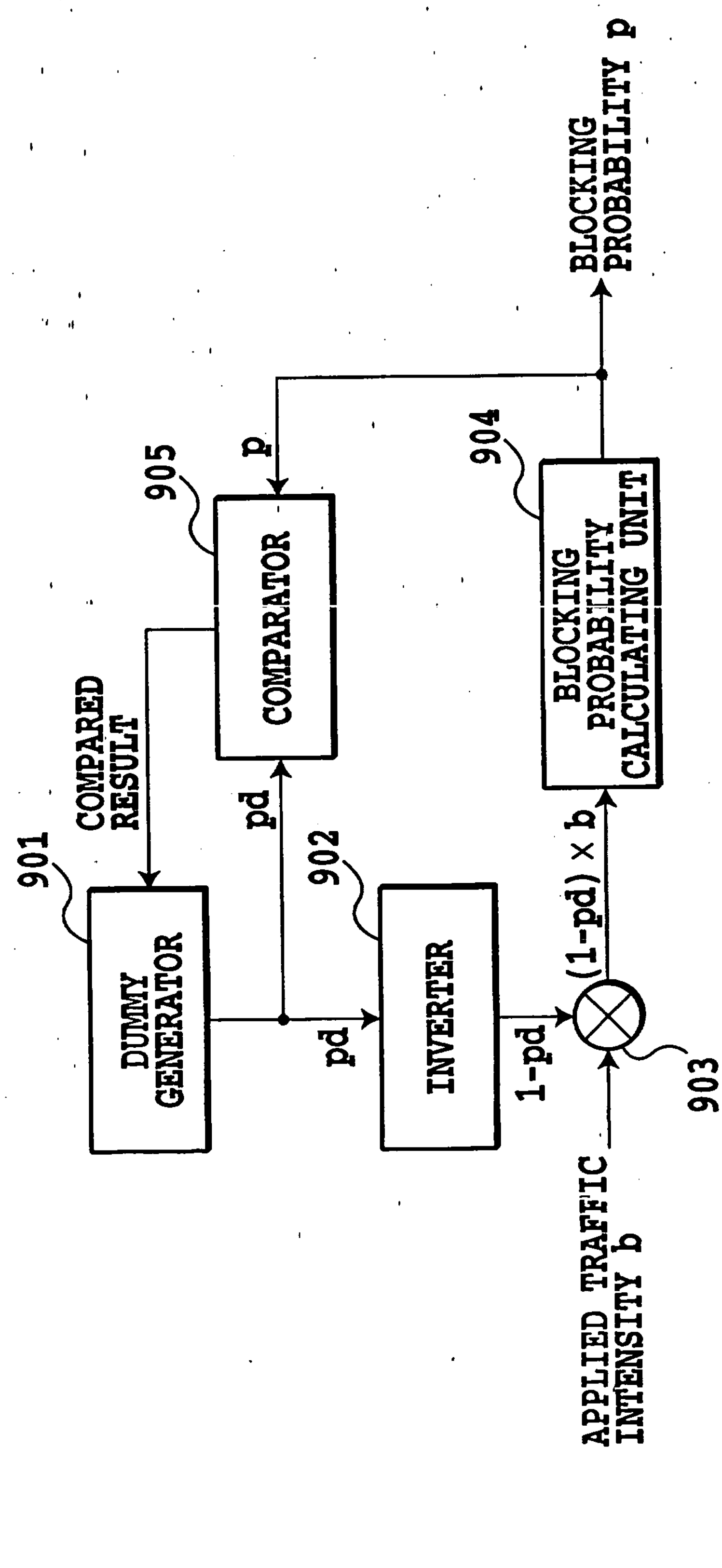
DUMMY GENERATOR
901
COMPARED RESULT
COMPARATOR
905
p
pd
INVERTER
902
pd
1-pd
903
(1-pd) × b
APPLIED TRAFFIC INTENSITY b
BLOCKING PROBABILITY CALCULATING UNIT
904
BLOCKING PROBABILITY p

FIG.9

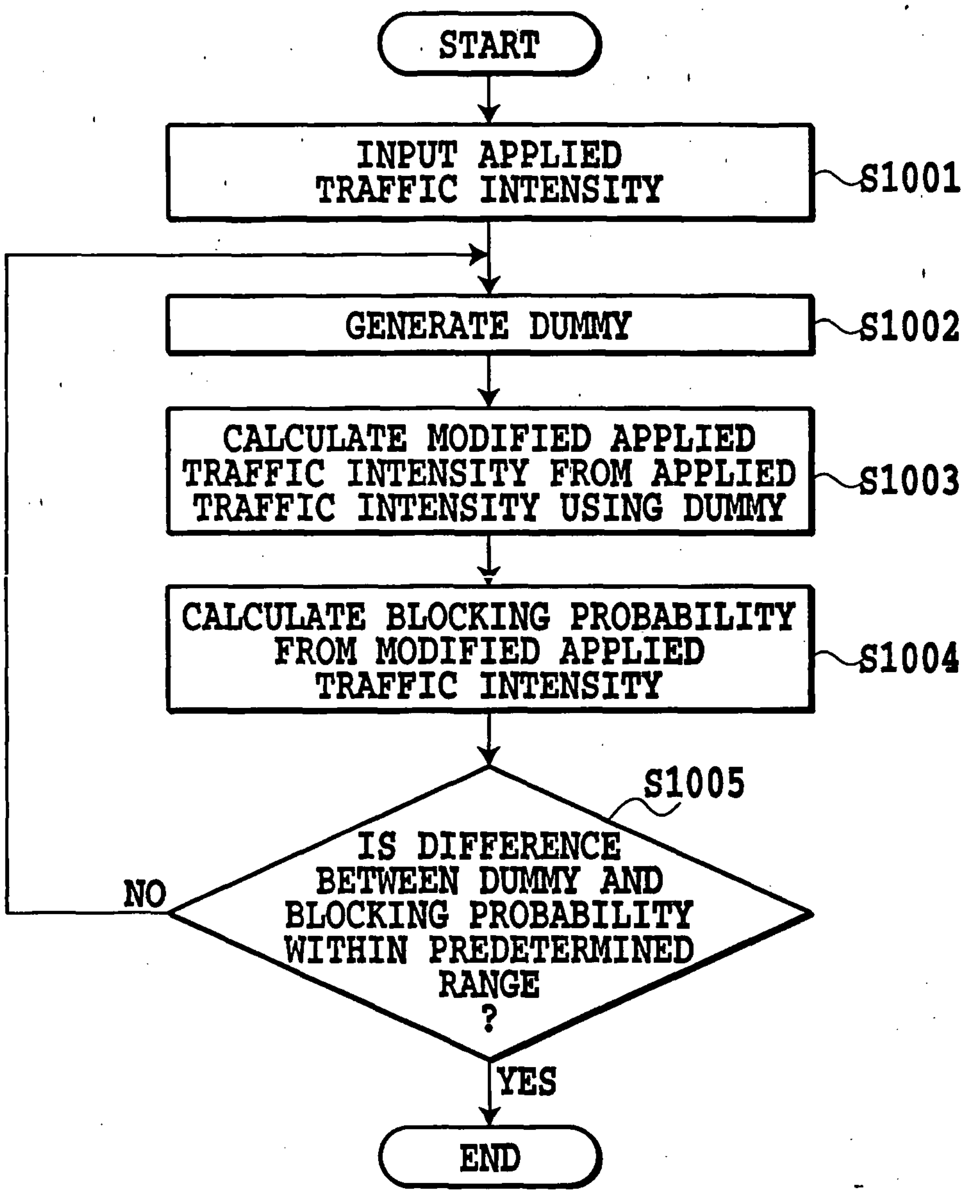
START
INPUT APPLIED TRAFFIC INTENSITY
S1001
GENERATE DUMMY
S1002
CALCULATE MODIFIED APPLIED TRAFFIC INTENSITY FROM APPLIED TRAFFIC INTENSITY USING DUMMY
S1003
CALCULATE BLOCKING PROBABILITY FROM MODIFIED APPLIED TRAFFIC INTENSITY
S1004
S1005
IS DIFFERENCE BETWEEN DUMMY AND BLOCKING PROBABILITY WITHIN PREDETERMINED RANGE ?
NO
YES
END

FIG.10

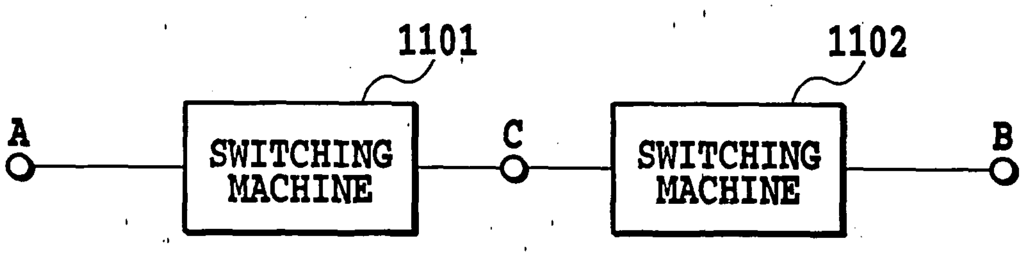


FIG.11

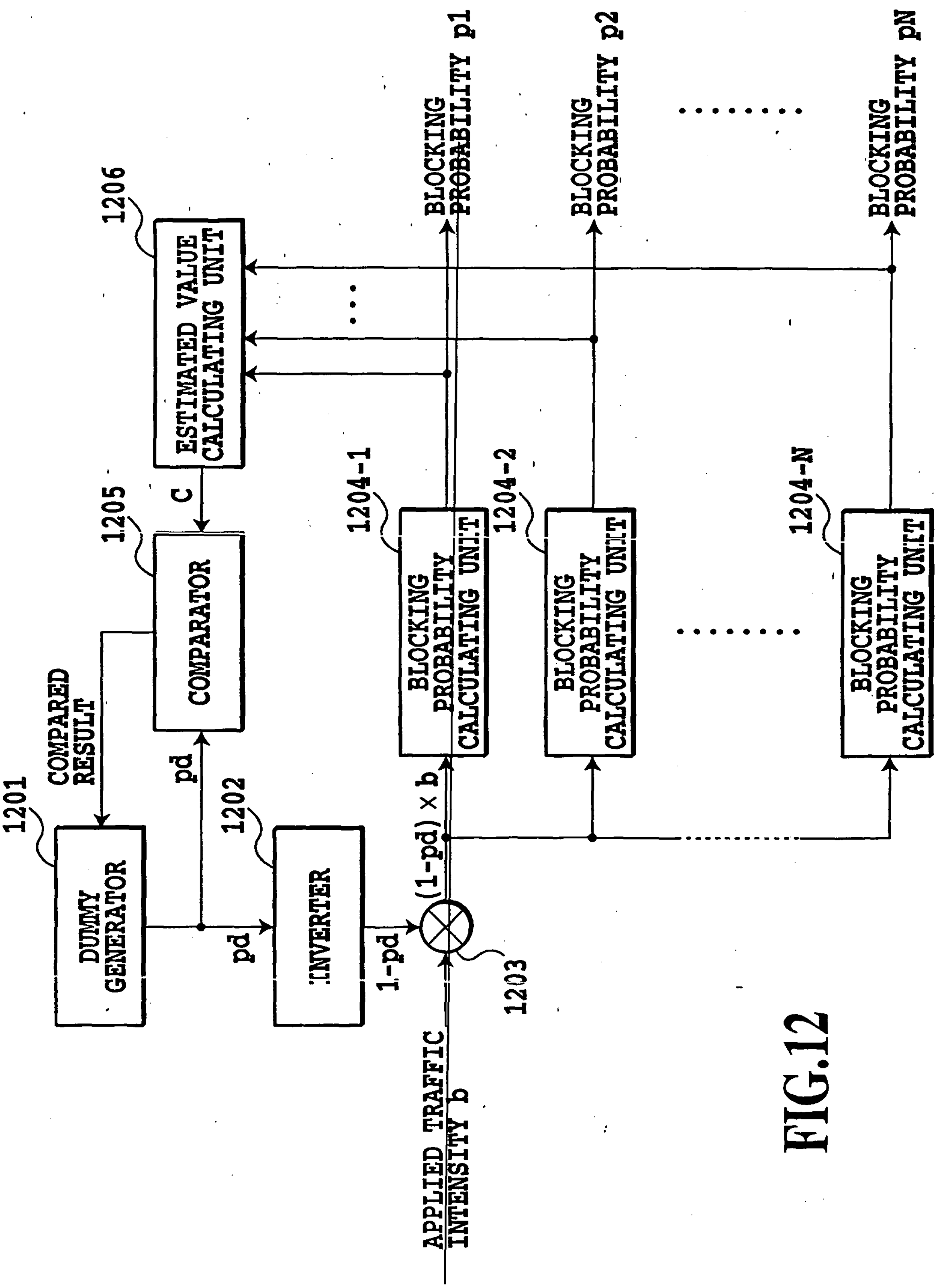
1201
DUMMY GENERATOR
COMPARED RESULT
1205
COMPARATOR
C
1206
ESTIMATED VALUE CALCULATING UNIT
pd
1202
INVERTER
pd
1-pd
1203
APPLIED TRAFFIC INTENSITY b
(1-pd) × b
1204-1
BLOCKING PROBABILITY CALCULATING UNIT
1204-2
BLOCKING PROBABILITY CALCULATING UNIT
1204-N
BLOCKING PROBABILITY CALCULATING UNIT
BLOCKING PROBABILITY p1
BLOCKING PROBABILITY p2
BLOCKING PROBABILITY pN

FIG.12

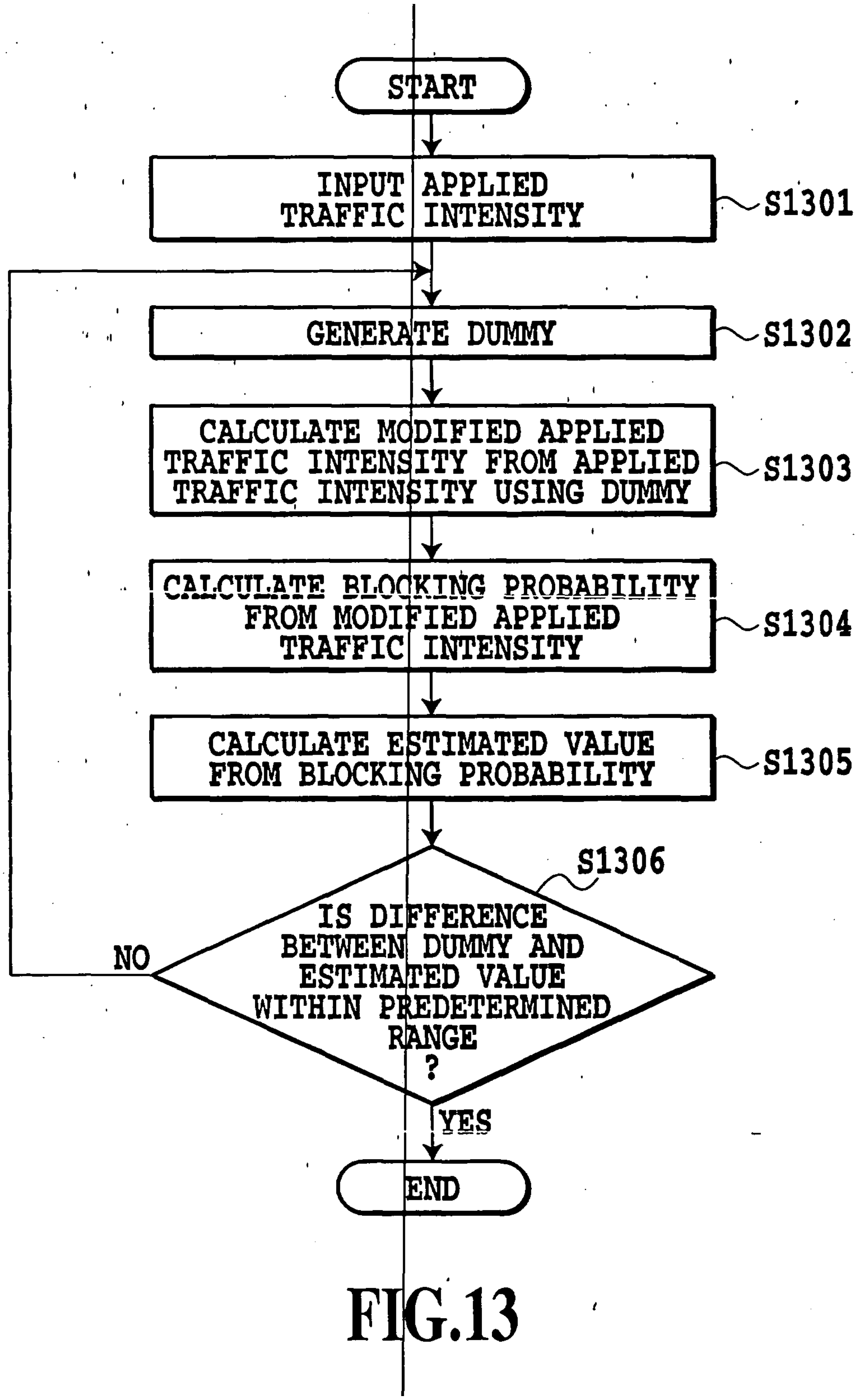
START
INPUT APPLIED TRAFFIC INTENSITY
S1301
GENERATE DUMMY
S1302
CALCULATE MODIFIED APPLIED TRAFFIC INTENSITY FROM APPLIED TRAFFIC INTENSITY USING DUMMY
S1303
CALCULATE BLOCKING PROBABILITY FROM MODIFIED APPLIED TRAFFIC INTENSITY
S1304
CALCULATE ESTIMATED VALUE FROM BLOCKING PROBABILITY
S1305
S1306
IS DIFFERENCE BETWEEN DUMMY AND ESTIMATED VALUE WITHIN PREDETERMINED RANGE ?
NO
YES
END

FIG.13

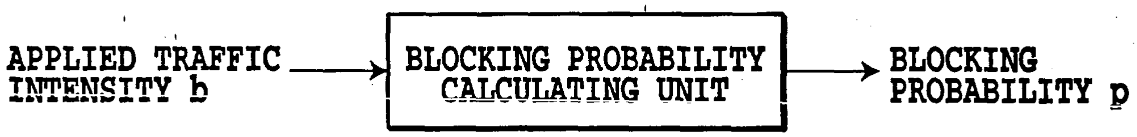


PRIOR ART

FIG.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8191481 A
- WO 9830057 A
- US 5293640 A


### Non-patent literature cited in the description


- **FUJII ; ASAKURA ; YAMAZAKI.** Cell Design System in Mobile Communication. *NTT DoCoMo Technical Journal,* January 1995, vol. 1 (4), 28-34
- **OHMATUZAWA ; YAMASHITA.** Total Support System for Station Establishment Design. *NTT DoCoMo Technical Journal,* April 1996, vol. 4 (1), 28-31
- **LEONARD KLEINROCK.** Queueing Systems Volume I: Theory. John Wiley & Sons, 1975, 105-106
- **A. M. VITERBI ; A. J. VITERBI.** Erlang capacity of a power controlled CDMA system. *IEEE J. Select. Areas Commun.,* August 1993, vol. 11, 892-900
- **M.HATA.** Empirical Formula for Propagation Loss in Land Mobile Radio Services. *IEEE Trans. on Vehic. Technol.,* August 1980, vol. VT-29 (3